(19) Europäisches Patentamt
European Patent Office
Office européen des brevets

(11) Numéro de publication: **0 108 023**
**B1**

(12) # FASCICULE DE BREVET EUROPÉEN

(45) Date de publication du fascicule du brevet: **17.12.86**

(21) Numéro de dépôt: **83420146.9**

(22) Date de dépôt: **06.09.83**

(51) Int. Cl.⁴: **C 08 K 5/00,** C 08 L 27/06 // (C08K5/00, 5:07, 5:09, 5:10, 5:13, 5:36)

(54) **Procédé de stabilisation de polymères à base de chlorure de vinyle.**

(30) Priorité: **08.10.82 FR 8217025**

(43) Date de publication de la demande:
**09.05.84 Bulletin 84/19**

(45) Mention de la délivrance du brevet:
**17.12.86 Bulletin 86/51**

(84) Etats contractants désignés:
**AT BE CH DE FR GB IT LI LU NL SE**

(56) Documents cité:
**US-A-4 102 839**

**CHEMICAL ABSTRACTS, vol. 69, no. 16, 14 octobre 1968, page 5600, no. 59782j, Columbus, Ohio, USA T. KIMURA: "Cerium compounds as poly(vinyl chloride) stabilizers"**
**CHEMICAL ABSTRACTS, vol. 77, no. 12, 18 septembre 1972, page 48, no. 76126f, Columbus, Ohio, USA**
**R. GÄCHTER et al.: "Taschenbuch der Kunststoff-Additive", 1979, pages 164-171, Carl Hanser Verlag, Münich, DE.**

(73) Titulaire: **RHONE- POULENC SPECIALITES CHIMIQUES, "Les Miroirs" 18, Avenue d'Alsace, F-92400 Courbevoie (FR)**

(72) Inventeur: **Carette, Louis, 64 rue de l'Egalité Résidence Rodin Appt. 1411, F-92130 - Issy- les-Moulineaux (FR)**
Inventeur: **Gay, Michel, 11 rue Garibaldi, F-69006 Lyon (FR)**

(74) Mandataire: **Vignally, Noel, RHONE- POULENC INTERSERVICES Service Brevets Chimie Centre de Recherches de Saint- Fons B.P. 62, F-69192 Saint- Fons Cedex (FR)**

EP 0 108 023 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

**Description**

La présente invention concerne la stabilisation des polymères à base de chlorure de vinyle ainsi que les mélanges stabilisants servant à la réalisation de la stabilisation et les compositions polymériques stabilisées obtenues.

Dans le présent texte on entend par polymère à base de chlorure de vinyle :

- un homopolymère du chlorure de vinyle, quel que soit son mode d'obtention;
- un copolymère obtenu par copolymerisation du chlorure de vinyle avec un ou plusieurs autres monomères présentant une double liaison éthylénique polymérisable, comme par exemple les esters vinyliques, le chlorure de vinylidène, les acides maléique ou fumarique ou leurs esters, les esters acryliques ou méthacryliques, les oléfines telles que l'éthylène, le propylène ou l'hexène, le styrène, les éthers vinyliques (n-vinyldodècylèther notamment);
- un mélange d'homopolymère et de copolymère.

Les copolymères contiennent habituellement au moins 50% en poids de motifs chlorure de vinyle. De préférence ces copolymères contiennent au moins 80 % en poids de motifs chlorure de vinyle.

Les polymeres à base de chlorure de vinyle et notamment le chlorure de polyvinyle, matière de base dans l'industrie de transformation des matières plastiques, doivent être mis en oeuvre à une température de l'ordre de 150 à 160°C. A cette température et même déjà à des températures inférieures, ces polymères subissent une dègradation thermique se traduisant d'abord par un jaunissement progressif et conduisant ensuite à un noircissement. Cette dégradation a une influence néfaste sur les propriétés mécaniques des polymères et la coloration est inacceptable pour un certain nombre d'applications, comme par exemple la préparation d'objets à paroi mince transparente. De très nombreux systèmes stabilisants oht été proposés pour résoudre ce problème. Parmi ces stabilisants beaucoup d'entre eux procurent de bons résultats et sont couramment utilisés. C'est le cas notamment des carboxylates métalliques et plus précisément des mélanges de carboxylate de cadmium et de carboxylate de baryum ou des mélanges de carboxylate de zinc et de carboxylate de calcium (ou d'autres métaux alcalino-terreux). Ces systèmes stabilisants primaires sont très employés, seuls ou avec des stabilisants secondaires.

Un autre type de stabilisants métalliques courants est constitué par les dérivés organiques de l'étain tels que les mercaptides d'organoétain et les maléates d'organoétain.

Un article de PURE AND APPLIED CHEMISTRY, Vol. 49, pages 627 à 648 (1977) présente une étude sur de nombreux stabilisants du PVC comprenant en particulier les stabilisants à base de dérivés métalliques.

Un article japonais, résumé dans CHEMICAL ABSTRACTS (1968 - volume 69, 59782j), indique que les effets stabilisants, sur le PVC de certains composés du cérium ont été étudiés ; selon cet article le stéarate de cérium aurait un effet stabilisant similaire à celui du stéarate de baryum, mais il n'y aurait pas d'effet synergétique des mélanges des composés du cérium avec d'autres stabilisants courants.

La demande de brevet japonais No. 66/71069 décrit la stabilisation des polymères du chlorure de vinyle à l'aide de sels organiques de terres rares ; le resume des CHEMICAL ABSTRACTS (volume 77, 76126f) indique que les sels de cerium et de lanthane des acides stéarique et versatique sont de meilleurs stabilisants à la chaleur et à la lumière que les stéarates de Zn, Ba et Cd habituels.

Cependant malgré tout l'intérêt des stabilisants connus les recherches continuent dans ce domaine car, selon les applications envisagées des polymères à base de chlorure de vinyle, tel ou tel système stabilisant présente des inconvénients plus ou moins importants. Il est toujours intéressant pour les formulateurs de disposer d'une vaste gamme de systèmes stabilisants, dans laquelle ils pourront choisir les composés possédant le plus d'avantages techniques ou économiques pour une application particulière.

Un des objets de la présente invention concerne un nouveau procédé de stabilisation des polymères à base de chlorure de vinyle caractérisé par l'emploi conjoint de quantités efficaces d'au moins un dérivé organique de lanthanide et d'au moins un dérivé organique de zinc ou de cadmium.

Dans le présent texte on appellera lanthanides ou terres rares les métaux de la classification périodique des éléments ayant les numéros atomiques allant de 57 à 71, ainsi que l'yttrium qui possède des propriétés voisines bien qu'ayant un numéro atomique de 39.

On peut utiliser des dérivés organiques de l'un quelconque des lanthanides : cérium, lanthane, praséodyme, néodyme, samarium, europium, gadolinium, terbium, dysprosium, holmium, erbium, ytterbium, thulium, lutétium et yttrium ou des mélanges de dérivés organiques de plusieurs de ces lanthanides.

En général, en raison des quantités relatives des composés des divers lanthanides dans les minerais les plus courants, notamment dans la monazite et la bastnaesite, lorsque l'on met en oeuvre un dérivé organique d'un seul lanthanide, ce dernier est le cérium, le lanthane, le praséodyme et le néodyme. Le cérium est parmi ces métaux le plus abondant et convient particulièrement bien.

Lorsque des mélanges de dérivés organiques de plusieurs lanthanides sont utilisés, ils comprennent le plus souvent le cérium et/ou le lanthane et/ou le praséodyme et/ou le néodyme.

Il peut en effet être avantageux de ne pas procéder à la séparation longue et coûteuse de tous les lanthanides présents en relativement faibles quantités dans les minerais couramment traités.

Quand de tels mélanges de dérivés organiques de plusieurs lanthanides sont mis en oeuvre dans le procédé selon l'invention, le cérium et/ou le lanthanide et/ou le praséodyme et/ou le néodyme représentent généralement au moins 40 % en moles du total des lanthanides.

Dans le présent texte quand il sera question de dérivé de lanthanide ce terme englobera les dérivés

organiques de chaque lanthanide seul ainsi que les mélanges de dérivés organiques de plusieurs lanthanides.

Par dérivé organique de lanthanide, du zinc ou du cadmium on entend plus particulièrement les sels des divers acides carboxyliques, les dérivés métalliques des composés phénoliques, les mercaptides et les chélates des composés β-dicarbonylés.

Plus précisément ledit procédé de stabilisation des polymères à base de chlorure de vinyle est caractérisé par l'emploi conjoint de quantités efficaces :

a) d'au moins un dérivé organique de lanthanide choisi parmi:

- les sels de lanthanide:

+ des acides aliphatiques monocarboxyliques ayant de 2 à 30 atomes de carbone ou dicarboxyliques ayant de 3 à 30 atomes de carbone, saturés ou comportant une ou plusieurs doubles liaisons éthyléniques, et pouvant comporter 1 ou plusieurs substituants tels que les atomes d'halogènes, les groupements hydroxyle,les groupements alkoxy ayant de 1 à 12 atomes de carbone, les groupements mercapto, les groupements phényle, phénoxy, naphtyle ou cyclohexyle, dont les cycles sont éventuellement substitués par un ou plusieurs atomes d'halogènes, groupements hydroxyle, groupements alkyles ayant 1 à 6 atomes de carbone ou alkoxy ayant 1 à 6 atomes de carbone;

+ des acides benzoïque, naphtoïque-1 , naphtoïque-2, cyclopentane-carboxylique, cyclohexane-carboxylique, cyclopentène-carboxyliques ou cyclohexène-carboxyliques, les parties cycliques de ces acides pouvant comporter un ou plusieurs substituants tels que les atomes d'halogènes, les groupements hydroxyle, les groupements alkyles ayant 1 à 12 atomes de carbone, alkényles ayant 2 à 12 atomes de carbone, alkoxy ayant 1 à 12 atomes de carbone, les groupements phényle, benzyle, phénoxy ou cyclohexyle, les groupements alkoxycarbonyle ayant 2 à 24 atomes de carbone ou alkénoxycarbonyle ayant 4 à 24 atomes de carbone;

+ des monoesters d'alkyle (le groupement alkyle ayant 1 à 24 atomes de carbone) ou d'alkényle (le groupement alkényle ayant 3 à 24 atomes de carbone) des acides aliphatiques dicarhoxyliques indiqués précédemment,

+ des acides carboxyliques hétérocycliques notamment de ceux dérivés de la pyridine, du furanne, du thiophène, du pyrrole et du pyranne, pouvant comporter un ou plusieurs substituants tels que les atomes d'halogènes, les groupements hydroxyle, les groupements alkyles ayant 1 à 12 atomes de carbone, les groupements alkoxy ayant 1 à 12 atomes de carbone, les groupements alkényles ayant 2 à 12 atomes de carbone, les groupements alkoxycarbonyle ayant 2 à 24 atomes de carbone ou alkénoxycarbonyle ayant 4 à 24 atomes de carbone;

- les phénolates de lanthanide dérivés du phénol, du naphtol-1 ou du naphtol-2, dont les parties cycliques peuvent comporter un ou plusieurs substituants tels que les atomes d'halogènes, les groupements alkyles ou alkoxy ayant 1 à 24 atomes de carbone, alkényles ayant 2 à 24 atomes de carbone, phényle, benzyle, phénoxy ou cyclohexyle;

- les mercaptides de lanthanide notamment ceux qui dérivent des acides thioglycolique ou thiomalique et de leurs esters d'alkyle, (le radical alkyle ayant 1 à 12 atomes), d'alkényle (le radical alkènyle ayant 2 à 12 atomes de carbone), de phényle, de benzyle, de cyclohexyle, d'alcanediol (ayant de 2 à 12 atomes de carbone), de dihydroxybenzène, de dihydroxycyclohexane, les parties cycliques desdits esters pouvant être substituées par un ou plusieurs radicaux alkyles ou alkoxy ayant de 1 à 6 atomes de carbone ;

- les chélates de lanthanide de composés β-dicarbonylés notamment ceux qui dérivent des composés de formule generale (I) :

$R_1$ - CO - $CHR_2$ - CO - $R_3$ (1)

dans laquelle :

- $R_1$ et $R_3$, identiques ou différents, représentent:

+ un groupement alkyle, linéaire ou ramifié, ayant 1 à 36 atomes de carbone, éventuellement substitué par un ou des atomes d'halogène,

+ un groupement alkényle, linéaire ou ramifié, ayant 3 à 36 atomes de carbone, éventuellement substitué par un ou des atomes d'halogènes,

+ un radical aryle ou un radical aryle portant sur le cycle aromatique un ou plusieurs substituants tels que

. les radicaux alkyles ayant 1 à 6 atomes de carbone, éventuellement substitués par un ou des atomes d'halogènes,

. les radicaux alkényles ayant 2 à 6 atomes de carbone, éventuellement substitués par un ou des atomes d'halogènes,

. le groupement nitro,

. le groupement - CHO,

. le groupement -COOH,

. les groupements alkoxy ayant 1 à 6 atomes de carbone,

. les groupements -$COOR_4$, $R_4$ étant un radical alkyle ayant 1 à 12 atomes de carbone ou alkényle ayant 2 à 12 atomes de carbone,

. le groupement OH,

. les atomes d'halogènes,

+ un radical aralkyle dont la partie aliphatique comporte de 1 à 12 atomes de carbone et dont la partie cyclique peut comporter un ou plusieurs des substituants indiqués précédemment,

+ un radical cycloaliphatique comportant de 5 à 12 atomes de carbone et dont la partie cyclique peut comporter une ou plusieurs doubles liaisons carbone-carbone et porter un ou plusieurs des substituants

indiqués précédemment,

+ un enchaînement de plusieurs des radicaux indiqués précédemment,

les différents radicaux aliphatiques précédemment définis pouvant comporter un ou plusieurs atomes d'oxygène -O- ou de soufre -S- ou groupements carbonyles - CO - ou carboxylatss - COO - ;

- $R_2$ représente un atome d'hydrogène;

b) d'au moins un dérivé organique du zinc ou du cadmium choisi parmi :

- les sels de zinc ou de chadmium des acides carboxyliques dont proviennent les sels de lanthanide indiqués précédemment;

- les phénolates de zinc ou de cadmium des phénols dont proviennent les phénolates de lanthanide indiqués précédemment,

- les mercaptides de zinc ou de cadmium des acides thiocarboxyliques dont proviennent les mercaptides de lanthanid indiqués précédemment,;

- les chélates de zinc ou de cadmium des composés β-dicarbonylés dont proviennent les chélates de lanthanide indiqués précédemment.

Parmi les dérivés de lanthanide qui peuvent être utilisés dans le procédé de stabilisation selon l'invention on choisit fréquemment, en particulier pour des raisons pratiques ou pour des raisons économiques de disponibilitè ou de prix :

- les sels de lanthanide :

+ des acides aliphatiques monocarboxyliques ayant de 6 à 24 atomes de carbone, saturés ou possédant une double liaison éthylénique, et pouvant comporter un ou plusieurs substituants tels que des atomes de chlore, groupements hydroxyle, groupements alkoxy ayant de 1 à 6 atomes de carbone, groupements phényle, phénoxy ou cyclohexyle, ces groupements cycliques étant éventuellement substitués par un ou plusieurs atomes de chlore, groupements hydroxyle, groupements alkyles ou alkoxy ayant 1 à 6 atomes de carbone;

+ des acides mercaptomonocarboxyliques ayant de 2 à 6 atomes de carbone ou mercaptodicarboxyliques ayant de 3 à 6 atomes de carbone;

+ des acides benzoïque ou cyclohexane-carboxylique, dont la partie cyclique peut comporter un ou plusieurs substituants tels qu'atomes de chlore, groupements hydroxyles, groupements alkyles ou alkoxy ayant 1 à 6 atomes de carbone ou groupements alkoxycarbonyle ayant 2 à 12 atomes de carbone ;

+ des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyle, groupements mercapto, groupements alkoxy ayant 1 à 6 atomes de carbone ;

+ des acides phénylalkylcarboxyliques dont la partie alkyle possède de 1 à 4 atomes de carbone et la partie cyclique peut comporter un ou plusieurs substituants tels qu'atomes de chlore, groupements hydroxyle, groupements alkyles ou alkoxy ayant 1 à 6 atomes de carbone,;

- les phènolates de lanthanide dérivès du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle.

Pour les mêmes raisons que pour les dérivés de lanthanide, on utilise plus fréquemment parmi les dérivés du zinc ou du cadmium précédemment indiqués :

- les sels de zinc ou de cadmium :

+ des acides aliphatiques monocarboxyliques ayant de 6 à 24 atomes de carbone, saturés ou possédant une double liaison éthylénique, et pouvant comporter un ou plusieurs substituants tels que des atomes de chlore, groupements hydroxyle, groupements alkoxy ayant 1 à 6 atmmes de carbone, groupements phényle, phénoxy ou cyclohexyle, ces groupements cycliques étant éventuellement substitués par un ou plusieurs atomes de chlore, groupements hydroxyle, groupements alkyles ou alkoxy ayant 1 à 6 atomes de carbone;

+ des acides mercaptomonocarboxyliques ayant de 2 à 6 atomes de carbone ou mercaptodicarboxyliques ayant de 3 à 6 atomes de carbone ;

+ des acides benzoïque ou cyclohexane carboxylique, dont la partie cyclique peut comporter un ou plusieurs substituants tels qu'atomes de chlore, groupements hydroxyles, groupements alkyles ou alkoxy ayant 1 à 6 atomes de carbone, ou groupements alkoxycarbonyle ayant 2 à 12 atomes de carbone;

+ des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyle, groupements mercapto, groupements alkoxy ayant 1 à 6 atomes de carbone;

+ des acides phénylalkylcarboxyliques dont la partie alkyle possède de 1 à 4 atomes de carbone et la partie cyclique peut comporter un ou plusieurs substituants tels qu'atomes de chlore, groupements hydroxyle, groupements alkyles ou alkoxy ayant 1 à 6 atomes de carbone;

- les phénolates de zinc ou de cadmium dérivés du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle.

A titre d'exemples non limitatifs de dérivés organiques des lanthanides on peut citer :

- les sels de lanthanide, notamment de cérium, de lanthane, de praséodyme et de néodyme, des acides propionique, hexanoïques, n.octanoïque, éthyl-2 hexanoïque, isooctanoïque, nonanoïques, décanoïques, laurique, stéarique, oléique, ricinoléïque, margarique, tétradécanoïques, hydroxy-12 stéarique, docosanoïques,

docosène-13-oïque (acide érucique), chloro-2 décanoïque, octyl-2 décanoïque, hydroxy-2 hexanoïque, thioglycolique, mercaptopropionique, thiomalique, cyclohexyl-6 hexanoïque, benzoïque, phénylacétique, phényl-2 propanoïque, méthyl-2 benzoïque, methyl-4 benzoïque, phénoxy-2 benzoïque, propyl-4 benzoïque, méthoxy-4 benzoïque, tertiobutyl-4 benzoïque, salicylique, tertiobutyl-5 salicylique, hydroxy-9 méthoxy-3 benzoïque, diméthoxy-3,4 benzoïque, naphtoïque-1, naphtoïque-2, cyclohexane-carboxylique, nicotinique, isonicotinique, méthyl-4 furanne-carboxylique-3, du maléate de monoisooctyle, du maléate de mono(éthoxy-2 éthyle), du phtalate de monobutyle, du thiomalate de monobutyle, du thiomalate de monohexyle ;

- les phénolates de lanthanides, notamment de cérium, de lanthane, de praséodyme et de néodyme.des composés phénoliques suivants : phénol, crésols, éthylphénols, xylénols, butylphénols, isopentylphénols, isooctylphénols, tertiononylphénols, décylphénols, dodécylphénols, terticoctylphénols, cyclohexyl-4 phénol, phényl-4 phénol, ditertiononylphénols, méthyl-isohexylphénols;

- les chélates de lanthanides, notamment de cérium de lanthane, de praséodyme et de néodyme des β-dicétones suivantes : l'heptanedione-2,4 ; la décanedione-2,4 ; la méthyl-2 décène-2-dione-6,8 ; la méthyl-2 nonène-2 dione-6,8; la stéaroylacétone ; la stéaroyl-1 octanone-2 ; le dioxo-7,9 décanoate d'éthyle ; la benzoylacétone ; l'acétylacétone ; la benzoyl-1 octanone-2 ; la diphényl-1,4 butanedione-1,3 ; la stéaroylacétophénone ; la palmitoylacétophénone ; la benzoyl-1 méthyl-4 pentanone ; le benzoyl-octacosanoyl-méthane ; le paraméthoxybenzoyl-stéaroylméthane ; le dibenzoylméthane ;

- les mercaptides de lanthanides, notamment de cérium, de lanthane, de praséodyme et de néodyme de l'acide thioglycolique, du thioglycolate d'isooctyle, du thioglycolate d'octadécyle, du thioglycolate de benzyle, du thioglycolate de lauryle, du dithioglycolate de cyclohexanediol-1,4 , du thioglycolate de tertiobutyl-4 cyclohexyle, de l'acide thiomalique, du thiomalate d'hexyle, du thiomalate d'éthyl-2 hexyle, du thiomalate de dodécyle, du thiomalate de benzyle, du thiomalate de cyclohexyle, du thiomalate de propanediol-1,3 , du thiomalate de butanediol-1,4 , du thiomalate d'hexanediol-1,6.

A titre d'exemples non limitatifs de dérivés organiques du zinc ou du cadmium on peut citer :

- les sels de zinc ou de cadmium des acides carboxyliquesindiqués précédemment pour les sels de lanthanides;

- les phénolates de zinc ou de cadmium des composés phénoliques indiqués précédemment pour les phénolates de lanthanides;

- les chélates de zinc ou de cadmium des β-dicétones indiqués précédemment pour les chélates de lanthanides,

- les mercaptides de zinc ou de cadmium des acides thioglycolique et thiomalique et de leurs esters indiqués précédemment pour les mercaptides de lanthanides.

Les dérivés des lanthanides, qui ne sont pas directement disponibles, sont préparés par des méthodes classiques, telles que la réaction d'un acide carboxylique ou de son anhydride , d'un composé phénolique, d'un acide mercaptocarboxylique (ou d'un de ses esters) ou d'une β-dicétone sur un oxyde ou un hydroxyde de lanthanide, ou selon le cas sur un mélange de tels oxydes ou hydroxydes, dans un milieu solvant approprié et en chauffant si nécessaire.

Il en est de même pour les dérivés du zinc et du cadmium. Dans les dérivés de lanthanide utilisés dans le procédé de stabilisation selon l'invention, le lanthanide peut se trouver aux différents degrés d'oxydation qu'il possède éventuellement, le plus fréquemment il se trouve au degré d'oxydation III.

La quantité de dérivé organique de lanthanide exprimée en pourcentage en poids dudit dérivé par rapport au polymère à base de chlorure de vinyle peut varier dans de très larges limites en fonction du degré de stabilisation souhaité et selon les stabilisants secondaires éventuellement présents.

Généralement on utilise de 0,005 % à 5 % en poids de dérivé organique de lanthanide par rapport au polymère à base de chlorure de vinyle.

De préférence ces proportions pondérales varient de 0,05 % à 3 % en poids de dérivé de lanthanide par rapport au polymère à base de chlorure de vinyle.

La quantité de dérivé organique du zinc ou du cadmium que l'on utilise dans le procédé selon l'invention peut également varier largement.

Généralement on utilise de 0,01 % à 1 % de dérivé organique du zinc ou du cadmium par rapport au polymère à base de chlorure de vinyle.

De préférence ces proportions pondérales varient de 0,02 % à 0,5 % de dérivé du zinc ou du cadmium par rapport au polymère à base de chlorure de vinyle.

Lorsqu'il met en oeuvre des dérivés de lanthanide, notamment du cérium, associés à des dérivés du zinc, le procédé selon l'invention conduit à des polymères à base de chlorure de vinyle susceptibles d'être utilisés pour des usages alimentaires, tels que la confection de bouteilles ou d'emballages.

Les dérivés de lanthanide et du zinc ou du cadmium peuvent être incorporés au polymère en même temps que les divers autres adjuvants tels que pigments, charges, lubrifiants, stabilisants "lumière", modificateurs de résistance au choc (pour les formulations "rigides" des polymères), plastifiants (pour les formulations "flexibles" ou "souples" des polymères), émulsifiants, agents antistatiques, ignifugeants.

Ils peuvent également être préalablement mélangés entre eux, seuls ou avec certains autres adjuvants, afin de constituer des compositions stabilisantes.

Une variante intéressante d'obtention des compositions stabilisantes consiste à préparer en une seule opération le mélange dérivé de lanthanide /dérivé du zinc ou dérivé de lanthanide/dérivé du cadmium en faisant par exemple réagir un acide carboxylique ou son anhydride ou un composé phénolique ou un acide

mercaptocarboxylique (ou l'un de ses esters) ou une β-dicétone sur un mélange d'oxydes ou d'hydroxydes de lanthanide et de zinc ou de lanthanide et de cadmium. On a ainsi un mélange plus intime des dérivés, ce qui peut conduire à une efficacité accrue de la composition stabilisante.

De telles compositions stabilisantes, servant à la réalisation du procédé selon l'invention, constituent un autre objet de l'invention.

Dans ces compositions stabilisantes le rapport pondéral dérivé organique de lanthanide / dérivé organique du zinc ou du cadmium varie généralement entre 0,2 et 5. Ce rapport pondéral est de préférence compris entre 0,5 et 3.

Le procédé de stabilisation selon l'invention peut être amélioré en associant, aux dérivés organiques de lanthanide et de zinc ou de cadmium précédemment décrits, d'autres stabilisants connus de l'homme du métier.

Parmi ces stabilisants thermiques auxiliaires on peut citer tout d'abord les époxydes, les phosphites organiques, les composés phénoliques et les polyols.

Ces époxydes sont généralement des composés complexes, habituellement des polyglycérides époxydés comme l'huile de soja époxydée, les huiles de lin ou de poisson époxydées, la talloil époxydée ou des esters époxydés d'acides gras, ou des hydrocarbures époxydés comme le polybutadiène époxydé ou des éthers époxydés.

De nombreux phosphites organiques, notamment d'alkyle ou d'aryle, sont également connus pour leur activité stabilisante, comme par exemple le phodphite de trisnonylphényle, le phosphite de bis(ditertiobutyl-2,4 phényle) et de nonylphényle, le phosphite de bis(cyclohexyl-2 phényle) et de tridécyle, le phosphite de tris(tertiobutyl-2 méthyl-4 phényle), le phosphite de ditertioamyl-2,4 phényle et de diisodécyle, le phosphite de phényle et d'éthyl-2 hexyle, le phosphite de trieisodécyle, le phosphite de bisphénol A hydrogéné, le diphosphite de bis (ditertioamyl-2,4 phényle) et de pentaérythritol, le diphosphite de bis (ditertiobutyl-2,6 phényle) et de pentaérythritol, le diphosphite de distéaryle et de pentaérythritol.

En genéral on utilise de 0,01 à 5 % en poids de phosphite par rapport au polymère à stabiliser et de préférence de 0,1 à 2 %.

Certains composés phénoliques comme l'hydroxytoluène butylé et d'autres phénols substitués ont aussi une action stabilisante.

Les polyols conviennent également pour allonger l'effet stabilisant des composés métalliques utilisés dans le procédé selon l'invention. Un compromis doit toutefois être trouvé car ces produits ont tendance à colorer les compositions. Pour des raisons de mise en oeuvre à température élevée des polymères à base de chlorure de vinyle, il est préférable que les polyols utilisés aient un point d'ébullition supérieur à 15O°C et de préférence supérieur à 170°C.

A titre d'exemples de tels polyols on peut citer des triols comme de triméthylolpropane, le glycérol, l'hexanetriol-1,2,6, le butanetriol-1,2,4 et le tris(hydroxyéthyl)isocyanurate, des tétrols comme le pentaérythritol, le diglycérol, des pentitols comme le xylitol, des hexitols comme le sorbitol, le mannitol et le dipentaérythritol, des polyols à huit groupes hydroxyle comme le tripentaérythritol et des polymères à groupes hydroxyle libres comme les alcools polyvinyliques, notamment ceux dans lesquels il reste moins de 30 % en moles de groupes esters par rapport à l'ensemble des groupes hydroxyle et esters et qui présentent une viscosité à 20°C, en solution aqueuse à 4 % en poids, comprise entre $4 \times 10^{3}$ et $60 \times 10^{-3}$ Pascal.seconde.

Parmi ces polyols ceux qui possèdent plus de 4 groupements hydroxyle dans leur molécule et les alcools polyvinyliques tels que définie précédemment sont les plus intéressants.

En général on utilise de 0,005 à 1,5 % en poids de polyol par rapport au polymère à stabiliser et de préférence de 0,01 à 0,8 %.

D'autres stabilisants organiques secondaires associés aux dérivés des lanthanides et du zinc ou du cadmium améliorent encore notablement la stabilisation thermique des polymères à base de chlorure de vinyle.

Ces stabilisants secondaires sont bien connus de l'homme du métier. Ce sont par exemple :

- les β-dicétores ou β-cétoaldéhydes;
- les esters de l'acide aminocrotonique;
- le phényl-2 indole et ses dérivés;
- les dihydro-1,4 diméthyl-2,6 dialkoxycarbonyl-3,5 pyridines;
- les esters de l'acide thioglycolique;
- les diesters de l'acide thiomalique;
- les β-cétoesters;
- les dialkyl-1,3 amino-6 uraciles; - les dialkyl-1,3 amino-6 thio-2 uraciles.

Les β-dicétones et β-cétoaldéhydes, qui peuvent être utilisés dans le procédé de stabilisation selon l'invention, ont été notamment décrits comme stabilisants des polymères à base de chlorure de vinyle dans FR-A-2 297 227 et dans FR-A-2 324 681, FR-A-2 351 149, FR-A-2.352.025, FR-A-2.383.988) et FR-A-2 456 132 rattachés à ce brevet.

Ce sont plus précisément des composés de formule générale (I) :

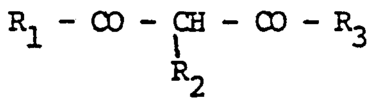 (I)

dans laquelle :

- $R_1$ et $R_3$, identiques ou différents, représentent :

+ un groupement alkyle, linéaire ou ramifié, ayant 1 à 36 atomes de carbone, éventuellement substitué par un ou des atomes d'halogènes,

+ un groupement alkényle, linéaire ou ramifié, ayant 3 à 36 atomes de carbone, éventuellement substitué par un ou des atomes d'halogènes,

+ un radical aryle ou un radical aryle portant sur le cycle aromatique un ou plusieurs substituants tels que :

. les radicaux alkyles ayant 1 à 6 atomes de carbone, éventuellement substitués par un ou des atomes d'halogènes,

. les radicaux alkényles ayant 2 à 6 atomes de carbone, éventuellement substitués par un ou des atomes d'halogènes,

. le groupement nitro,

. le groupement - CHO,

. le groupement -COOH,

. les groupements alkoxy ayant 1 à 6 atomes de carbone,

. les groupements $-COOR_4$, $R_4$ étant un radical alkyle ayant 1 à 12 atomes de carbone ou alkényle ayant 2 à 12 atomes de carbone,

. le groupement OH,

. les atomes d'halogènes,

+ un radical aralkyle dont la partie aliphatique comporte de 1 à 12 atomes de carbone et dont la partie cyclique peut comporter un ou plusieurs des substituants indiqués précédemment,

+ un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

+ un enchaînement de plusieurs des radicaux indiqués précédemment,

les différents radicaux aliphatiques précédemment définis pouvant comporter un ou plusieurs atomes d'oxygène -O- ou de soufre -S- ou groupements carbonyles -CO- ou carboxylates - COO - ;

- l'un des radicaux $R_1$ ou $R_3$ peut représenter un atome d'hydrogène,

- $R_2$ represente :

+ un atome d'hydrogène;

+ un radical alkyle ou alkényle ayant jusqu'à 36 atomes de carbone et pouvant comporter un ou des enchaînements - O - , - S - , - CO - ou - COO - ;

+ un radical $-CO-R_5$, $R_5$ étant un radical alkyle ayant de 1 à 36 atomes de carbone ou un radical aryle éventuellement porteur d'un ou plusieurs substituants indiqués prècédemment;

+ un radical

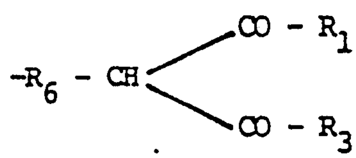

. $R_6$ étant un radical alkylène de 1 à 6 atomes de carbone ou un atome d'hydrogène,

. $R_1$ et $R_3$ ayant les significations indiquées précédemment,

+ un radical carbamoyle N-substitué de formule :

$- OC - NH - R_7$

dans laquelle $R_7$ est un radical aryle éventuellement porteur d'un ou plusieurs des substituants indiqués précédemment,

+ un radical de formule :

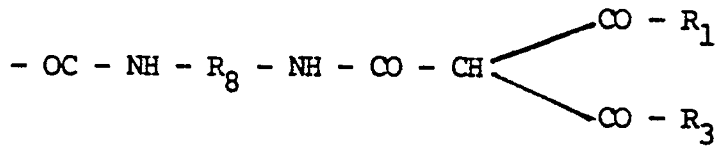

dans laquelle :

. $R_1$ et $R_3$ ont les significations indiquées précédemment . $R_8$ représente :

- un radical arylène éventuellement porteur d'un ou plusieurs des substituants indiqués précédemment,

- un radical diphénylène méthane dont un cycle ou les 2 cycles sont éventuellement porteurs d'un ou plusieurs des substituants indiqués précédemment,

+ un radical de formule :

- COO - $R_9$

dans laquelle $R_9$ est un radical alkyle substitué ou non ayant de 1 à 36 atomes de carbone,

+ un radical de formule :

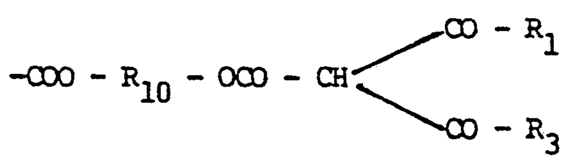

dans laquelle $R_1$ et $R_3$ ont les significations indiquées précédemment et $R_{10}$ représente un radical alkylène, linéaire ou ramifié, substitué ou non par un ou plusieurs atomes d'halogène, ayant 1 à 20 atomes de carbone;

- les symboles $R_1$ et $R_3$ peuvent représenter ensemble un radical divalent ayant 2 à 5 atomes de carbone et pouvant comporter un atome d'oxygène, de soufre ou d'azote;

- les symboles $R_1$ et $R_2$ peuvent représenter ensemble un radical divalent tel que :

+ un radical alkylène ou alkénylène linéaire ou ramifié ayant de 3 à 36 atomes de carbone,

+ un radical aralkylène ayant de 7 à 36 atomes de carbone,

+ un radical arylène ou cycloaliphatique divalent ayant moins de 14 atomes de carbone, les radicaux cycloaliphatiques pouvant compter une ou plusieurs doubles liaisons carbone-carbone,

ces radicaux divalents peuvent être substitués par un ou plusieurs atomes d'halogène et les cycles aromatiques et cycloaliphatiques peuvent porter un ou plusieurs des substituants indiqués précédamment,

les parties aliphatiques des radicaux divalents précédents peuvent comporter un ou plusieurs atomes d'oxygène - O - ou de soufre - S - ou groupements - CO - ou - COO -,

- les divers radicaux représentés par $R_1$ et $R_3$ sont tels que les atomes de carbone directement liés aux groupements carbonyles de la formule (I) ne comportent pas de double liaison.

A titre d'exemples de composés de formule (1) utilisables dans le procédé selon l'invention on peut citer :

l'heptanedione-2,4 ; la décanedione-2,4 ; la méthyl-2 décène-2-dione-6,8 ; la méthyl-2 nonène-2 dione-6,8 ; la stéaroylaoétone ; la stéaroyl-1 octanone-2 ; le triacétylnéthane ; le dioxo-7,9 décanoate d'éthyle ; la benzoylacétone; la benzcyl-1 octanone-2 ; la diphenyl-l,4 butaredione-1,3 ; la stearoylacetophenone,; la palmitoylacétophénone ; la benzoyl-1 méthyl-4 pentanone-2 ; le benzoyl-octacosanoyl-méthane ; le bis(dioxo-2,4 butyl)-1,4 benzène ; le paraméthoxybenzoyl-stéaroyl-méthane ; l'allyl-2 phényl-1 butanedione-1,3 ; le méthyl-2 acétyl-2 acétaldéhyde ;le benzoylacétaldéhyde ; l'acétoaoétyl cyclohexène-3 ; le bis(dioxo-2,6 cyclohexyl) méthane ; l'acétyl-2 oxo-1 tétrahydro-1,2,3,4 naphtalène le palmitoyl-2 oxo-1 tétrahydro-1,2,3,4 naphtalène ; l'oxo-1 stéaroyl-2 tétrahydro-1,2,3,4 naphtalène ; l'acétyl-2 cyclohexanone-1 ; la benzoyl-2 cyclohexanone-1 ; l'acétyl-2 cyclohexanedione-1,3 ; le dibenzoylmèthane ; le tribenzoylmèthane ; le bis(paraméthoxybensoyl) méthane ; la (N-phénylcarbamebyl)-1 benzoyl-l acétone; la (N-phénylcarbamoyl)-1 acétyl-1 acétone, le diacétylacétohexane.

En général on utilise de 0,005 % à 5 % en poids de β-dicétone ou β-cétoaldéhyde par rapport au polymère à base de chlorure de vinyle.

Les esters de l'acide aminocrotonique sont généralement des aminocrotonates d'alkyle à longue chaîne ou des aminocrotonates de thioalkylèneglycols.

Le phényl-2 indole est un composé bien connu qui peut être également remplacé par ses dérivés, notamment ceux qui sont décrits dans FR-A-2.273.841, FR-A-2.275.461 et FR-A-2.313.422.

Les dérivés de la dihydropyridine ont été notamment décrits dans FR-A-2.239.496) et FR-A-2.405.974) et FR-A-2.405.937.

Les esters de l'acide thioglycolique ont été décrits dans la demande de brevet européen EP-A-22047.

Les diesters de l'acide thiomalique qui peuvent être utilisés sont plus particulièrement ceux qui répondent :
- soit à la formule générale (II) :

$$R_{11}\text{-OOC} - \underset{\underset{SH}{|}}{CH} - CH_2 - COOR_{12} \qquad \text{(II)}$$

dans laquelle les radicaux $R_{11}$ et $R_{12}$, identiques ou différents représentent :
. un radical aliphatique linéaire ou ramifié, saturé ou comportant une ou plusieurs insaturations éthyiéniques, et pouvant comprendre un ou plusieurs atomes d'oxygène - O - ou de soufre - S -,
. un radical cycloaliphatique ou cycloaliphatique-alipnatique, mono ou polycyclique, la partie cyclique portant éventuellement un ou plusieurs substituants alkyles ou alkoxy, pouvant comporter une ou plusieurs insaturations éthyléniques et pouvant être liée à la partie aliphatique par un atome d'oxygène - O -,
. un radical arylaliphatique, la partie cyclique portant éventuellement un ou plusieurs substituants alkyles ou alkoxy et pouvant être liée à la partie aliphatique par un atome d'oxygène - O -,
. un enchaînement de plusieurs des radicaux précédemment cités ;
- soit à la formule générale (III) :

$$OH - [-R'OOC - \underset{\underset{SH}{|}}{CH} - CH_2 - COO -]_n - R' - OH \qquad \text{(III)}$$

dans laquelle :
- n est un nombre entier de 1 à 10,
- R' représente :
. un radical aliphatique divalent, linéaire ou ramifié, saturé ou comportant une ou plusieurs insaturations éthyléniques, et dont l'enchaînement peut comprendre un ou plusieurs atomes d'oxygène - O - ou de soufre -S-, ou un ou plusieurs groupements - COO - ;
. un radical divalent cycloaliphatique ou cycloaliphatique-aliphatique, mono ou polycyclique, la partie cyclique portant éventuellement un ou plusieurs substituants alkyles ou alkoxy, pouvant comporter une ou plusieurs insaturations éthyléniques et pouvant être liée à la partie aliphatique par un atome d'oxygène - O - ;
. un radical arylaliphatique divalent, la partie cyclique portant éventuellement un ou plusieurs substituants alkyle ou alkoxy et pouvant être liée à la partie aliphatique par un atome d'oxygène - O - ;
. un enchaînement de plusieurs des radicaux précédemment cités.

Ces différents stabilisants sont généralement efficaces à des taux variant de 0,01 % à 5 % en poids par rapport au polymère à stabiliser et de préférence compris entre 0,1 % et 2 % en poids.

Les β-cétoesters qui peuvent être utilisés dans le cadre de l'invention sont notamment ceux qui ont été décrits dans le brevet américain n° 3 346 536.

Ce peut être également de tels composés dont la formule comporte un ou plusieurs atomes de soufre, tels que par exemple les β-cétoesters provenant d'acides β-cétocarboxyliques et de composés hydroxylés comportant un ou plusieurs atomes de soufre ou ceux qui dérivent d'acides β-thiocétocarboxyliques et de composés hydroxylés ou encore d'acides β-cétothiocarboxyliques et de composés hydroxylés.

Les uraciles pouvant intervenir comme stabilisants organiques secondaires dans le procédé selon l'invention sont des composés bien connus. Ce sont par exemple ceux qui sont décrits dans FR-A-1 513 317.

Les thiouraciles que l'on peut également utiliser ont été décrits par exemple dans la demande EP-A-41 479.

Il a été remarqué gu'il est particulièrement efficace de stabiliser les polymères à base de chlorure de vinyle par les dérivés organiques de lanthanide et de zinc ou de cadmium définis précédemment, lorsgue l'on utilise conjointement
- un ou plusieurs des stabilisants organiques secondaires indiqués précédemment ,
- un phosphite organique ou un mélange de phosphites organiques indiqués précédemment
- et/ou un ou plusieurs polyols égalèment indiqués précédemment.

On observe en effet une action synergétique des dérivés métalliques et des stabilisants secondaires organiques encore plus importante, en présence des phosphites organiques et/ou des polyols.

De manière habituelle l'incorporation des différents stabilisants, mis en oeuvre au cours de la stabilisation complémentaire après la polymérisation, est faite sur le polymère à l'état de poudre. Elle peut être effectuée

en même temps que celle des divers autres adjuvants. Toutes les méthodes usuelles connues dans ce domaine peuvent convenir pour réaliser le mélange des différents ingrédients.

Généralement les adjuvants solides et le polymère en poudre sont introduits dans un mélangeur à agitation rapide, tandis que les adjuvants liquides sont rajoutés lorsque la température du mélange atteint environ 40 à 60°C.

Le mélange obtenu peut soit être utilisé à l'état de poudre par le transformateur, soit être préalablement mis sous forme de granulés.

Les compositions de polymère à base de chlorure de vinyle stabilisées par le procédé selon l'invention peuvent être mises en forme selon toutes les techniques utilisées habituellement pour travailler les compositions de chlorure de polyvinyle, comme par exemple l'injection, l'extrusion, l'extrusion-soufflage, le calandrage et le moulage par rotation.

Le polymère stabilisé par des mélanges dérivé organique de lanthanide, et notamment de cérium, + dérivé organique du zinc, présente par rapport au même polymère stabilisé par les mêmes quantités de dérivé organique correspondant du calcium + dérivé organique du zinc, une meilleure clarté.

Dans les exemples qui suivent le polymère stabilisé est mis sous forme de plaques, afin que l'on puisse mettre en évidence par des tests de vieillissement thermique les avantages apportée par le procédé de stabilisation.

**Exemple 1 à 3**

On prépare la composition de base suivante A : - PVC en poudre, obtenu par polymerisation en suspension et caractérisé par un K-WERT de 58 : 1000 g

- Agent renforçateur de choc (copolymère du butadiène, du styrène et du méthacrylate de méthyle) : 70 g
- Mannitol : 5 g
- Huile de soja époxydée : 40 g
- Phosphite de trilauryle . 2,5 g
- Lubrifiant commercialisé sous la marque CIRE E® (ester de colophane) : 3,0 g
- Lubrifiant commercialisé sous la marque CIRE OP® (montanate de polyol) : 2 0 g
- Lubrifiant commercialisé sous la marque STENOL PC® (mélange d'octadécanol et d'hexadécanol : 15 g

A différentes fractions de cette composition de base contenant 100 grammes de PVC chacune, sont ajoutés différents stabilisants indiqués dans le tableau 1 ci-après.

Avec chacune des compositions ainsi obtenues on prépare des feuilles d'environ 1 mm d'épaisseur, par malaxage de 5 minutes à 175°C dans un malaxeur à cylindre du type -LESCUYER- (diamètre des cylindres : 20 cm ; rapport de friction 1,2).

Sur des bandes de 25 x 1,5 cm découpées dans les plaques ainsi préparées sont effectués les tests de coloration et de stabilité thermique à 190°C.

1) Mesure de l'indice de jaune (norme ASTM D 1925) au temps 0 : coloration initiale la

2) Temps de noircissement (en minutes) à 190°C dans un four ventilé (de type METRASTAT) : tc

3) Mesure de l'indice de jaune (norme ASTM D 1925) après 15 mn de séjour à 190°C dans une étude ventilée : lb.

Les resultats de ces mesures sont rassemblés dans le tableau I. Les compositions des exemples 1, 2 et 3 correpondent à la présente invention tandis que les compositions des essais comparatifs a, b et c correspondent à l'art antérieur.

TABLEAU I

| ESSAIS | Stabilisants thermiques : poids pour 100 g de PVC | Temps de noircissement tc en min. | Indice de jaune initial Ia | Indice de jaune après 15 min à 190°C Ib |
|---|---|---|---|---|
| Exemple 1 | Stéarate de $Ce^{III}$ 0,15 g<br>Octanoate de Zn 0,10 g | 71 | 15 | 25 |
| Exemple 2 | Stéarate de $Ce^{III}$ 0,15 g<br>Octanoate de Zn 0,10 g<br>Stéaroyl-benzoyl-méthane 0,25 g | 70 | 11 | 27 |
| Exemple 3 | Stéarate de $Ce^{III}$ 0,10 g<br>Octanoate de Zn 0,10 g<br>Stéaroyl-benzoyl-méthane 0,25 g | 65 | 9,5 | 22 |
| Essai Comparatif a | Stéarate de Ca 0,30 g<br>Octanoate de Zn 0,12 g | 49 | 16 | 43 |
| Essai Comparatif b | Stéarate de Ca 0,15 g<br>Octanoate de Zn 0,10 g<br>Stéaroyl-benzoyl-méthane 0,25 g | 37 | 12 | 32 |
| Essai Comparatif c | Stéarate de Ca 0,30 g<br>Octanoate de Zn 0,12 g<br>Stéaroyl-benzoyl-méthane 0,25 g | 50 | 13 | 35 |

Ces exemples 1, 2 et 3 et les essais comparatifs a, b et c montrent l'avantage des compositions stabilisantes contenant un sel de cérium et un sel de zinc (avec éventuellement une β-dicétone) par rapport aux compositions contenant un sel de calcium et un sel de zinc (avec éventuellement une β-dicétone).

**Exemple 4 et 5**

Avec différentes fractions de la même composition de base A que dans les exemples 1 à 3 (chaque fraction contenant 100 grammes de PVC) auxquelles ont été ajoutés les stabilisants thermiques indiqués dans le tableau II, ont été préparées des feuilles de 1 millimètre d'épaisseur. Les tests de coloration et de stabilité thermique à 190° C indiqués précédemment ont été effectués.

Les résultats de ces tests sont rassemblés dans le tableau II.

TABLEAU II

| ESSAIS | Stabilisants thermiques : poids pour 100 g de PVC | | Temps de noircissement tc en min. | Indice de jaune initial Ia | Indice de jaune après 15 min à 190°C Ib |
|---|---|---|---|---|---|
| Exemple 4 | Stéarate de Ce III<br>Octanoate de Zn<br>Dihydro-1,4 diméthyl-2,6 di (dodécyloxycarbonyle) 3,5 pyridine | 0,15 g<br>0,10 g<br>0,12 g | 72 | 12 | 30 |
| Exemple 5 | Stéarate de Ce III<br>Octanoate de Zn<br>alpha-phényl-indole | 0,15 g<br>0,10 g<br>0,15 g | 60 | 11 | 26 |

**Exemple 6**

Cet exemple a pour but de montrer la possibilité améliorée de recyclage des compositions selon l'invention par rapport aux compositions de l'art antérieur.

Les essais ont été faits avec les compositions :

- de l'exemple 2 (selon l'invention)
- de l'essai comparatif c (selon l'art antérieur).

Les formulations selon l'exemple 2 et l'essai c sont préparées en mélangeur rapide du type HENSCHEL de 5 litres. Les mélanges en poudre sont prémalaxés en mélangeur lent (du type FARREL) pendant 2 minutes à 155° C, puis sur malaxeur à cylindres Pendant 5 minutes à 160° C. A l'aide des feuilles ainsi obtenues on prépare des films par calandrage sur calandre en L (du type SCHWABENTAHN) :

- température des rouleaux supérieurs : l8O° C
- température du 3ème rouleau : 195° C
- température du 4ème rouleau : 190° C
- température du rouleau décolleur : 90° C

Les films obtenus ont de 250 à 300 microns d'épaisseur. Après le premier calandrage, les formulations selon l'exemple 2 et selon l'essai comparatif c ont été recyclées chacune 3 fois en totalité. L'indice de jaune (norme ASTM D 1925) a été mesuré sur les derniers mètres des films après chaque passage en calandre. Les résultats sont rassemblés dans le tableau III ci-après.

TABLEAU III

| Essais | Formulation | Indice de jaune | | | |
|---|---|---|---|---|---|
| | | Après le 1er calandrage | Après le 1er recyclage total | Après le 2ème recyclage total | Après le 3ème recyclage total |
| Exemple 6 | Selon l'exemple 2 (avec Stéarate de Ce III) | 5,8 | 7,9 | 20,1 | 32 |
| Essai comparatif d | Selon l'essai comparatif c (avec stéarate de Ca) | 9,7 | 10,9 | 36,9 | 64,9 |

On observe que la formulation selon l'invention supporte mieux que la formulation selon l'art antérieur une succession d'opérations de calandrage.

**Exemples 7 à 17**

On prépare la composition de base B suivante :

- 1500 g de PVC en poudre caractérisé par un indice de viscosité de 80 selon la norme NF T 51013, obtenu par polymérisation en suspension et vendu sous la marque déposée LUCOVYL RS 8000® ;
- 120 g d'un agent renforçateur de choc (copolymère du butadiène, du styrène et du méthacrylate de méthyle);
- 15 g de lubrifiant vendu sous la marque CIRE E® (cire à base d'ester de colophane) ;
- 67,5 g d'huile de soja époxydée ;
- 2,25 g de stéarate de cérium ;
- 1,50 g d'octanoate de zinc.

On prélève 10 fractions de 113,75 g chacune de composition B (chaque fraction correspond à 100 g de PVC).

A chacune de ces fractions on rajoute une certaine quantité (indiquée dans le tableau IV ci-après) de différents stabilisants organiques :

- stéaroylbenzoylméthane (S B M)
- diacétylacétohexane (DAAH)
- mannitol
- phosphite de bisphénol A hydrogéné (PBH), produit commercial (MARK 1500®) obtenu par réaction du phosphite de triphényle sur le bisphénol A hydrogéné.

On prépare à l'aide de ces différentes compositions, ainsi qu'avec la composition B non modifiée, des feuilles d'un millimètre d'épaisseur, par malaxage sur mélangeur à 2 cylindres de minutes à 180° C.

On découpe dans les feuilles ainsi obtenues des éprouvettes rectangulaires d'environ 1 x 2 cm, que l'on place en étuve ventilée à 180° C pendant des durées variables.

On détermine la coloration des échantillons par comparaison avec un disque LOVIBOND selon l'échelle CARDNER.

Le tableau IV ci-aprés rassemble les indices de coloration GARDNER trouvés en fonction de la durée du vieillissement.

# TABLEAU IV

| Exemples | Stabilisants organiques ajoutés (poids en grammes pour 100 g de PVC) | Temps en minutes | INDICES GARDNER EN FONCTION DU TEMPS 0 | 7 | 14 | 21 | 30 | 45 | 60 | |
|---|---|---|---|---|---|---|---|---|---|---|
| 7 | Aucun (composition B seule) | | 2 | 3 | 4 | 6 | 8 | noir à: 36 min | | |
| 8 | PBH | 0,3 | 0,5 | 2 | 3 | 5 | 6 | noir à: 43 min | | |
| 9 | Mannitol | 0,2 | 3 | 6 | 7 | 7 | 8 | 9 | noir à: 60 min | |
| 10 | S B M | 0,3 | 1 | 2 | 4 | 5 | 7 | noir à: 40 min | | |
| 11 | P B H<br>Mannitol | 0,3<br>0,2 | 2 | 3 | 4 | 5 | 6 | 7 | bords noirs | noir à: 63 min |
| 12 | P B H<br>S B M | 0,3<br>0,3 | 0 | 0,5 | 2,5 | 4 | 6 | bords noirs | noir à: 46 min | |
| 13 | Mannitol<br>S B M | 0,2<br>0,3 | 0,5 | 1 | 2,5 | 3,5 | 5 | 7 | noir à: 60 min | |
| 14 | P B H<br>Mannitol<br>S B M | 0,3<br>0,2<br>0,2 | 0 | 0,5 | 1 | 2,5 | 3,5 | 4,5 | 6 | noir à: 80 min |
| 15 | DAAH | 0,3 | 1 | 2 | 4 | 5 | 7 | noir à: 44 min | | |
| 16 | DAAH<br>Mannitol | 0,3<br>0,2 | 0 | 0,5 | 1 | 1,5 | 3 | 4 | 10 | noir à 66 min |
| 17 | DAAH<br>Mannitol<br>P B H | 0,3<br>0,2<br>0,3 | 0 | 0 | 0,5 | 1 | 2,5 | 3,5 | 5 | noir à: 80 min |

**Exemples 18 à 25**

On prepare la composition de base C suivante :
- 1000 g du PVC utilisé pour les exemples 7 à 17 ;
- 8O g de copolymère du butadiène, du styrène et du méthacrylate de méthyle ;
- 10 g de CIRE E® ;
- 45 g d'huile de soja époxydée ;
- 1,5 g de stéarate de cérium ;
- 1,0 g d'éthyl-2 hexanoate de zinc.

On prélève 7 fractions de 113,75 g chacune de composition C (chaque fraction correspond à 100 g de PVC).

A chacune de ces fractions on rajoute une certaine quantité (indiquée dans le tableau V ci-après) de différents stabilisants organiques :
- dihydro-1,4 diméthyl-2,6 diéthoxycarbonyl-3,5 pyridine (DHP)
- Sorbitol
- mannitol
- phosphite de bisphénol A hydrogéné (PBH)
- Alpha-phényl indole (API)

On prépare à l'aide de ces différentes compositions, ainsi qu'avec la composition C non modifiée, des éprouvettes similaires à celles des exemples 7 à 17. On soumet ces éprouvettes au même test de vieillissement que dans les exemples 7 à 17.

Le tableau V ci-après rassemble les indices de coloration GARDNER trouvés en fonction de la durée du vieillissement.

TABLEAU V

| Exemples | Stabilisants organiques ajoutés (poids en grammes pour 100 g de PVC) | Temps en minutes | INDICES GARDNER EN FONCTION DU TEMPS | | | | | | | |
|---|---|---|---|---|---|---|---|---|---|---|
| | | | 0 | 7 | 14 | 21 | 30 | 45 | 60 | |
| 18 | Aucun (composition C seule) | | 2 | 3 | 4 | 6 | 8 | noir à: 36 min | | |
| 19 | DHP | 0,3 | 1 | 2 | 3 | 4 | 7 | noir à: 40 min | | |
| 20 | DHP<br>sorbitol | 0,3<br>0,1 | 1 | 1 | 2 | 2,5 | 4 | 7 | noir à: 50 min | |
| 21 | D H P<br>Mannitol | 0,3<br>0,2 | 1 | 1 | 1,5 | 2,5 | 4 | 6 | noir à: 56 min | |
| 22 | D M P<br>Mannitol<br>P B H | 0,3<br>0,2<br>0,3 | 1 | 1 | 1,5 | 2,5 | 4 | 6 | bords noirs | noir à: 62 min |
| 23 | A P I | 0,3 | 2,5 | 2,5 | 3,5 | 6 | 7 | noir à: 40 min | | |
| 24 | A P I<br>Mannitol | 0,3<br>0,2 | 0 | 1,5 | 3 | 3,5 | 4 | 6 | 10 | noir à: 64 min |
| 25 | A P I<br>Mannitol<br>P B H | 0,3<br>0,2<br>0,3 | 0 | 1,5 | 3 | 3 | 4 | 6 | 9 | noir à: 68 min |

**Exemples 26 à 44**

On prépare la composition de base D suivante :
- 2000 g du PVC utilisé pour les exemples 7 à 17 ;
- 160 g de copolymère du butadiène, du styrène et du méthacrylate de méthyle ;
- 20 g de CIRE E® ;
- 90 g d'huile de soja époxydée ;
- 3,0 g de stéarate de cérium ;
- 2,0 g d'octanoate de zinc;
- 6,0 g de phosphite de bisphénol A hydrogéné;
- 4,0 g de mannitol.

On prélève 18 fractions de 114,25 g chacune de composition D (chaque fraction correspond à 100 g de PVC).

A chacune de ces fractions on rajoute une certaine quantité (indiquée dans le tableau VT ci-après) de différents stabilisants organiques :
- Diacétylacétohexane (DAAH)
- Thioglycolate de néopentylglycol (TGNG)
- Thiomalate d'éthyl-2 hexyle (TMEH)
- (Dioxa-2,7 octylène-1,8)-4,4 bis (acétyl-2 gamma-butyrolactone) (BABL)

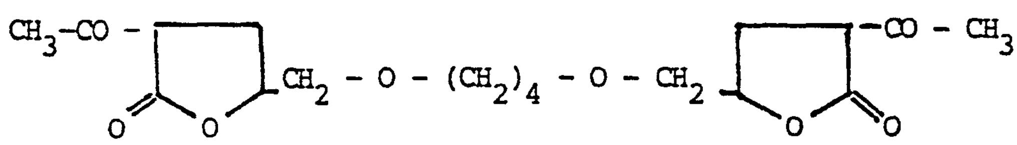

- Stéaroyl-1 octanone-2 (STON)
- Acétyl-2 cyclohexanedione-1,3 (ACD)
- Diacétylacétate d'hexadécyle (DAHD)
- Palmitate de la benzoylacétone (PBZA)
- Acétylacétate de butanediol-1,4 (AABD)
- Benzoylacétate d'éthyle (BZAE)
- Acétylacétate de thio-2,2' diéthanol (ATDE)
- Dibutyl-1,3 amino-6 uracile (DBAU)
- Dibutyl-1,3 amino-6 thiouracile (DBATU)

On prépare à l'aide de ces différentes compositions, ainsi qu'avec la composition D non modifiée, des éprouvettes similaires à celles des exemples 7 à 17. On soumet ces éprouvettes au même test de vieillissement que dans les exemples 7 à 17.

Le tableau VI ci-après rassemble les indices de coloration GARDNER trouvés en fonction de la durée du vieillissement.

TABLEAU VI

| Exemples | Stabilisants organiques ajoutés (poids en grammes pour 100 g de PVC) | Temps en minutes | INDICES GARDNER EN FONCTION DU TEMPS | | | | | | | |
|---|---|---|---|---|---|---|---|---|---|---|
| | | | 0 | 7 | 14 | 21 | 30 | 45 | 60 | |
| 26 | Aucun (composition D seule) | | 2 | 3 | 4 | 5 | 6 | 7 | 11 | noir à 65 min |
| 27 | DAAH | 0,2 | 0 | 0 | 0,5 | 1 | 2,5 | 4 | 6 | noir à 86 min |
| 28 | DAAH | 0,4 | 0 | 0 | 0 | 0,5 | 2 | 2,5 | 4 | noir à 85 min |
| 29 | TGNG | 0,2 | 0 | 1 | 2 | 3 | 4 | 7 | 8 | noir à 78 min |
| 30 | TGNG | 0,4 | 0 | 0 | 0,5 | 1 | 2,5 | 4 | 6 | noir à 79 min |
| 31 | TGNG | 0,8 | 0 | 0 | 0 | 0 | 1 | 2 | 5 | noir à 79 min |
| 32 | TMEH | 0,2 | 0 | 1,5 | 2,5 | 3,5 | 4,5 | 6 | 7 | noir à 78 min |
| 33 | TMEH | 0,4 | 0 | 0 | 0,5 | 2 | 3 | 4,5 | 7 | noir à 79 min |
| 34 | TMEH | 0,8 | 0 | 0 | 0 | 1,5 | 2 | 4 | 7 | noir à 78 min |
| 35 | BABL | 0,4 | 1 | 2 | 2,5 | 3 | 3,5 | 5 | 7 | noir à 78 min |
| 36 | STON | 0,4 | 0 | 0,5 | 1,5 | 3 | 4 | 6 | 6 | noir à 77 min |

TABLEAU VI (Suite)

| Exemples | Stabilisants organiques ajoutés (poids en grammes pour 100 g de PVC) | Temps en minutes | INDICES GARDNER EN FONCTION DU TEMPS | | | | | | | |
|---|---|---|---|---|---|---|---|---|---|---|
| | | | 0 | 7 | 14 | 21 | 30 | 45 | 60 | |
| 37 | ACD | 0,4 | 0 | 1,5 | 2 | 4 | 5 | 7 | 9 | noir à: 70 min: |
| 38 | DAHD | 0,4 | 0 | 0,5 | 1 | 3 | 4 | 5 | noir à: 60 min: | |
| 39 | PBZA | 0,4 | 0 | 0,5 | 1,5 | 3,5 | 5 | 7 | bords noirs | noir à: 63 min: |
| 40 | AABD | 1,2 | 1 | 2 | 2 | 3 | 4 | 4 | noir à: 60 min: | |
| 41 | BZAE | 0,3 | 1 | 3 | 3 | 4 | 5 | 7 | 9 | noir à: 72 min: |
| 42 | ATDE | 0,3 | 1 | 3 | 3 | 4 | 5 | 7 | 9 | noir à: 76 min: |
| 43 | DBAU | 0,3 | 0 | 1 | 3,5 | 5 | 12 | brun rouge | noir à: 48 min: | |
| 44 | DBATU | 0,3 | 0 | 0,5 | 3 | 4 | 9 | brun rouge | noir à: 48 min: | |

**Exemples 45 à 50**

On prépare la composition de base E suivante :
- 1000 g du PVC utilisé pour les exemples 7 à 17 ;
- 80 g de copolymère du butadiène, du styrène et du méthacrylate de méthyle ;
- 10 g de CIRE E® ;
- 45 g d'huile de soja époxydée ;
- 1,5 g de stéarate de cérium ;
- 1,0 g d'octanoate de zinc;
- 3,0 g de phosphite de bisphénol A hydrogene ;
- 3,0 g de stéaroylbenzoyl-méthane.

On prélève 5 fractions de 114,35 g chacune de composition E (chaque fraction correspond à 100 g de PVC).

A chacune de ces fractions on rajoute une certaine quantité (indiquée dans le tableau VII ci-après) de différents polyols.

On prépare à l'aide de ces différentes compositions, ainsi qu'avec la composition E non modifiée, des éprouvettes similaires à celles des exemples 7 à 17. On soumet ces éprouvettes au même test de vieillissement que dans les exemples 7 à 17.

Le tableau VII ci-après rassemble les indices de coloration GARDNER trouvés en fonction de la durée du vieillissement.

TABLEAU VII

| Exemples | Stabilisants organiques ajoutés (poids en grammes pour 100 g de PVC) | Temps en minutes | INDICES GARDNER EN FONCTION DU TEMPS 0 | 7 | 14 | 21 | 30 | 45 | 60 | |
|---|---|---|---|---|---|---|---|---|---|---|
| 45 | Aucun (composition E seule) | | 0 | 0,5 | 2,5 | 4 | 6 | bords noirs | noir à: 46 min | |
| 46 | Sorbitol | 0,2 | 0 | 0,5 | 1 | 2,5 | 3,5 | 4,5 | 6 | noir à: 79 min |
| 47 | Mannitol | 0,2 | 0 | 0,5 | 1 | 2,5 | 3,5 | 4,5 | 6 | noir à: 80 min |
| 48 | Xylitol | 0,2 | 0 | 1 | 1,5 | 2,5 | 4 | 5 | 7 | noir à: 77 min |
| 49 | Pentaérythritol | 0,6 | 0 | 0,5 | 1,5 | 2,5 | 3,5 | 5 | noir à: 60 min | |
| 50 | Triméthylolpropane | 0,8 | 0 | 0 | 2 | 3,5 | 5 | 9 | noir à: 50 min | |

**Revendications**

1°/ Procédé de stabilisation de polymères à base de chlorure de vinyle caractérisé par l'emploi conjoint de :

a) 0,005 % à 5 % en poids par rapport au polymère d'au moins un dérivé organique de lanthanide choisi parmi :

- les sels de lanthanide :

+ des acides aliphatiques monocarboxyliques ayant de 2 à 30 atomes de carbone ou dicarboxyliques ayant de 3 à 30 atomes de carbone, saturés ou comportant une ou plusieurs doubles liaisons éthyléniques, et pouvant comporter 1 ou plusieurs substituants tels que les atomes d'halogènes; les groupements hydroxyle, les groupements alkoxy ayant de 1 à 12 atomes de carbone, les groupements mercapto, les groupements phényle, phénoxy, naphtyle ou cyclohexyle, dont les cycles sont éventuellement substitués par un ou plusieurs atomes d'halogènes, groupements hydroxyle, groupements alkyles ayant 1 à 6 atomes de carbone ou alkoxy ayant I à 6 atomes de carbone;

+ des acides benzoïque, naphtoïque-1 , naphtoïque-2, cyclopentane-carboxylique, cyclohexane-carboxylique, cyclopentène-carboxyliques ou cyclohexène-carboxyliques, les parties cycliques de ces acides pouvant comporter un ou plusieurs substituants tels que les atomes d'halogènes, les groupements hydroxyle, les groupements alkyles ayant 1 à 12 atomes de carbone, alkényles ayant 2 à 12 atomes de carbone, alkoxy ayant 1 à 12 atomes de carbone, les groupements phényle, benzyle, phénoxy ou cyclohexyle, les groupements alkoxycarbonyle ayant 2 à 24 atomes de carbone ou alkénoxycarbonyle ayant 4 à 24 atomes de carbone;

+ des monoesters d'alkyle (le groupement alkyle ayant 1 à 24 atomes de carbone) ou d'alkényle (le groupement alkényle ayant 3 à 24 atomes de carbone) des acides aliphatiques dicarboxyliques indiqués précédemment;

+ des acides carboxyliques hétérocycliques notamment de ceux dérivés de la pyridine, du furanne, du thiophène, du pyrrole et du pyranne, pouvant comporter un ou plusieurs substituants tels que les atomes d'halogènes, les groupements hydroxyle, les groupements alkyles ayant 1 à 12 atomes de carbone, les groupements alkoxy ayant 1 à 12 atomes de carbone, les groupements alkényles ayant 2 à 12 atomes de carbone, les groupements alkoxycarbonyle ayant 2 à 24 atomes de carbone ou alkénoxycarbonyle ayant 4 à 24 atomes de carbone;

- les phénolates de lanthanide derives du phenol, du naphtol-1 ou du naphtol-2, dont les parties cycliques peuvent comporter un ou plusieurs substituants tels que les atomes d'halogènes, les groupements alkyles ou alkoxy ayant 1 à 24 atomes de carbone, alkényles ayant 2 à 24 atomes de carbone, phényle, benzyle, phénoxy ou cyclonexyle;

- les mercaptides de lanthanide notamment ceux qui dérivent des acides thioglycolique ou thiomalique et de leurs esters d'alkyle, (le radical alkyle ayant 1 à 12 atomes), d'alkényle (le radical alkényle ayant 2 à 12 atomes de carbone), de phényle, de benzyle, de cyclohexyle, d'alcanediol (ayant de 2 à 12 atomes de carbone), de dihydroxybenzène, de dihydroxycyclohexane, les parties cycliques desdits esters pouvant être substituées par un ou plusieurs radicaux alkyles ou alkoxy ayant de 1 à 6 atomes de carbone;

- les chélates de lanthanide de composés β-dicarbonylés notamment ceux qui dérivent des composés de formule générale (I) :

$R_1$ - CO - $CHR_2$ - CO - $R_3$ (1)

dans laquelle :

- $R_1$ et $R_3$, identiques ou différents, représentent :

+ un groupement alkyle, linéaire ou ramifié, ayant 1 à 36 atomes de carbone, éventuellement substitué par un ou des atomes d'halogène,

> + un groupement alkényle, linéaire ou ramifié, ayant 3 à 36 atomes de carbone, éventuellement substitué par un ou des atomes d'halogène,

+ un radical aryle ou un radical aryle portant sur le cycle aromatique un ou plusieurs substituants tels que :

. les radicaux alkyles ayant 1 à 6 atomes de carbone, éventuellement substitués par un ou des atomes d'halogènes,

les radicaux alkényles ayant 2 à 6 atomes de carbone, éventuellement substitués par un ou des atomes d'halogènes,

. le groupement nitro,

. le groupement - CHO,

. le groupement -COOH,

. les groupements alkoxy ayant I à 6 atomes de carbone,

. les groupements -$COOR_4$, $R_4$ etant un radical alkyle ayant I à 12 atomes de carbone ou alkényle ayant 2 à 12 atomes de carbone,

. le groupement OH,

. les atomes d'halogènes,

+ un radical aralkyle dont la partie aliphatique comporte de 1 à 12 atomes de carbone et dont la partie cyclique peut comporter un ou plusieurs des substituants indiqués précédemment,

+ un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

+ un enchaînement de plusieurs des radicaux indiqués précédemment,

les différents radicaux aliphatiques précédemment définis pouvant comporter un ou plusieurs atomes d'oxygène -O- ou de soufre - S - ou groupements carbonyles - CO - ou carboxylates - COO - ;

- $R_2$ réprésente un atome d'hydrogène;

b) 0,01 % à 1 % en poids par rapport au polymère d'au moins un dérivé organique du zinc ou du cadmium choisi parmi :

- les sels de zinc ou de cadmium des acides carboxyligues dont proviennent les sels de lanthanide indiqués précédemment;
- les phénolates de zinc ou de cadmium des phénols dont proviennent les phénolates de lanthanide indiqués précédemment;
- les mercaptides de zinc ou de cadmium des acides thiocarboxyliques dont proviennent les mercaptides de lanthanide indiqués précédemment;
- les chélates de zinc ou de cadmium des composés β-dicarbonylés dont proviennent les chélates de lanthanide indiqués précédemment.

c) d'au moins l'un des stabilisants thermiques secondaires suivants :

- les β-dicétones ou β-cétoaldéhydes,
- les esters de l'acide aminocrotonique;
- le phényl-2 indole et ses dérivés,
- les dihydro-1,4 diméthyl-2,6 dialkoxycarbonyl-3,5 pyridines,
- les esters de l'acide thioglycolique,
- les diesters de l'acide thiomalique,
- les β-cétoesters,
- les dialkyl-1,3 amino-6 uraciles,
- les dialkyl-1,3 amino-6 thio-2 uraciles.

2°/ Procédé selon la revendication 1, caractérisé en ce que l'on utilise :

a) au moins un dérivé organique de lanthanide choisi parmi :

- les sels de lanthanide :

+ des acides aliphatiques monocarboxyliques ayant de 6 à 24 atomes de carbone, saturés ou possédant une double liaison éthylénique, et pouvant comporter un ou plusieurs substituants tels que des atomes de chlore, groupements hydroxyle, groupements alkoxy ayant de 1 à 6 atomes de carbone, groupements phényle, phénoxy ou cyclohexyle, ces groupements cycliques étant éventuellement substitués par un ou plusieurs atomes de chlore, groupements hydroxyle, groupements alkyles ou alkoxy ayant 1 à 6 atomes de carbone;

+ des acides mercaptomonocarboxyliques ayant de 2 à 6 atomes de carbone ou mercaptodicarboxyliques ayant de 3 à 6 atomes de carbone ;

+ des acides benzoïque ou cyclohexane-carboxylique, dont la partie cyclique peut comporter un ou plusieurs substituants tels qu'atomes de chlore, groupements hydroxyles, groupements alkyles ou alkoxy ayant 1 à 6 atomes de carbone ou groupements alkoxycarbonyle ayant 2 à 12 atomes de carbone;

+ des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyle, groupements mercapto, groupements alkoxy ayant 1 à 6 atomes de carbone;

+ des acides phénylalkylcarboxyliques dont la partie alkyle possède de 1 à 4 atomes de carbone et la partie cyclique peut comporter un ou plusieurs substituants tels qu'atomes de chlore, groupement hydroxyle, groupements alkyles ou alkoxy ayant 1 à 6 atomes de carbone;

- les phénolates de lanthanide dérivés du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle;

b) au moins un dérivé organique du zinc ou du cadmium choisi parmi :

- les sels de zinc ou de cadmium :

+ des acides aliphatiques monocarboxyliques ayant de 6 à 24 atomes de carbone, saturés ou possédant une couple liaison éthylénique, et pouvant comporter un ou plusieurs substituants tels que des atomes de chlore, groupements hydroxyle, groupements alkoxy ayant 1 à 6 atomes de carbone, groupements phényle, phénoxy ou cyclohexyle, ces groupements cycliques étant éventuellement substitués par un ou plusieurs atomes de chlore, groupements hydroxyle, groupements alkyles ou alkoxy ayant 1 à 6 atomes de carbone;

+ des acides mercaptomonocarboxyliques ayant de 2 à 6 atomes de carbone ou mercaptodicarboxyliques ayant de 3 à 6 atomes de carbone ;

+ des acides benzoïque ou cyclohexane carboxylique, dont la partie cyclique peut comporter un ou plusieurs substituants tels qu'atomes de chlore, groupements hydroxyles, groupements alkyles ou alkoxy ayant 1 à 6 atomes de carbone, ou groupements alkoxycarbonyle ayant 2 à 12 atomes de carbone;

+ des monoesters d'alkyle (le groupement alkyle ayant 1 à 12 atomes de carbone) des acides aliphatiques dicarboxyliques ayant 4 à 24 atomes de carbone, saturés ou possédant une double liaison éthylénique, et pouvant comporter un ou plusieurs substituants tels qu'atomes de chlore, groupements hydroxyle, groupements mercapto, groupements alkoxy ayant 1 à 6 atomes de carbone;

+ des acides phénylalkylcarboxyliques dont la partie alkyle possède de 1 à 4 atomes de carbone et la partie cyclique peut comporter un ou plusieurs substituants tels qu'atomes de chlore, groupements hydroxyle, groupements alkyles ou alkoxy ayant 1 à 6 atomes de carbone;

- les phénolates de zinc ou de cadmium dérivés du phénol dont le cycle peut comporter un ou plusieurs substituants tels qu'atomes de chlore, groupements alkyles ou alkoxy ayant 1 à 12 atomes de carbone, groupements phényle, benzyle, phénoxy ou cyclohexyle.

3°/ Procédé selon l'une quelconque des revendications 1 ou 2 caractérisé en ce que l'on utilise de 0,05 à 3 % en poids de dérivé organique de lanthanide par rapport au polymère à base de chlorure de vinyle.

4°/ Procédé selon l'une quelconque des revendications 1 à 3 caractérisé en ce que l'on utilise de 0,02% à 0,5% en poids de dérivé organique de zinc ou de cadmium par rapport au polymère à base de chlorure de vinyle.

5°/ Procédé selon l'une quelconque des revendications 1 à 4 caractérisé en ce que le dérivé organique de lanthanide est un dérivé organique du cérium ou un mélange de dérivés organiques du cérium et d'un ou plusieurs des autres lanthanides.

6°/ Procédé selon l'une quelconque des revendications 1 à 4 caractérisé en ce que le dérivé organique de lanthanide est un dérivé organique du lanthane ou un mélange de dérivés organiques du lanthane et d'un ou plusieurs autres lanthanides choisis parmi le praséodyme, le néodyme, le samarium, l'europium, le gadolinium, le terbium, le dysprosium, l'holmium, l'erbium, l'ytterbium, le thulium, le lutétium et l'yttrium.

7°/ Procédé selon l'une quelconque des revendications 1 à 4 caractérisé en ce que le dérivé organique de lanthanide est un dérivé organique du praséodyme ou un mélange de dérivés organiques du praséodyme et d'un ou plusieurs autres lanthanides choisis parmi le néodyme, le samarium, l'europium, le gadolinium, le terbium, le dysprosium, l'holmium, l'erbium, l'ytterbium, le thulium, le lutétium et l'yttrium.

8°/ Procédé selon l'une quelconque des revendications 1 à 4 caractérisé en ce que le dérivé organique de lanthanide est un dérivé organique du néodyme ou un mélange de dérivés organiques au néodyme et d'un ou plusieurs autres lanthanides choisis parmi le samariun, l'europium, le gadolinium, le terbium, le dysprosium, l'holmium, l'erbium, l'ytterbium, le thulium, le lutétium et l'yttrium.

9°/ Procédé selon l'une quelconque des revendications 5 à 8 caractérisé en ce que le cérium et/ou le lanthane et/ou le praséodyme et/ou le néodyme représentent au moins 40 % en moles du total des lanthanides.

10°/ Procédé selon l'une quelconque des revendications 1 à 9 caractérisé en ce que l'on utilise au moins une β-dicétone ou un β-cétoaldéhyde de formule générale (I) :

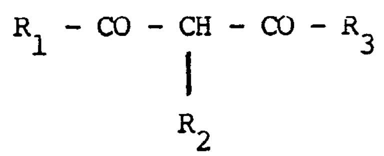

(I)

dans laquelle :

- $R_1$ et $R_3$, identiques ou différents, représentent:

+ un groupement alkyle, linéaire ou ramifié, ayant 1 à 36 atomes de carbone, éventuellement substitué par un ou des atomes d'halogènes,

+ un groupement alkényle, linéaire ou ramifié, ayant 3 à 36 atomes de carbone, éventuellement substitué par un ou des atomes d'halogènes,

+ un radical aryle ou un radical aryle portant sur le cycle aromatique un ou plusieurs substituants tels que :

. les radicaux alkyles ayant 1 à 6 atomes de carbone, éventuellement substitués par un ou des atomes d'halogènes,

. les radicaux alkényles ayant 2 à 6 atomes de carbone, éventuellement substitués par un ou des atomes d'halogènes,

. le groupement nitro,

. le groupement - CHO,

. le groupement -COOH,

. les groupements alkoxy ayant 1 à 6 atomes de carbone,

. les groupements $-COOR_4$, $R_4$ étant un radical alkyle ayant 1 à 12 atomes de carbone ou alkényle ayant 2 à 12 atomes de carbone,

. le groupement OH,

. les atomes d'halogènes,

+ un radical aralkyle dont la partie aliphatique comporte de 1 à 12 atomes de carbone et dont la partie cyclique peut comporter un ou plusieurs des substituants indiqués précédemment,

+ un radical cycloaliphatique comportant de 5 à 12 atomes de carbone et dont la partie cyclique peut comporter une ou plusieurs doubles liaisons carbone-carbone et porter un ou plusieurs des substituants indiqués précédemment,

+ un enchaînement de plusieurs des radicaux indiqués précédemment,

les différents radicaux aliphatiques précédemment définis pouvant comporter un ou plusieurs atomes d'oxygène - O - ou de soufre - S - ou groupements carbonyles - CO - ou carboxylates - COO - ;

- l'un des radicaux $R_1$ ou $R_3$ peut représenter un atome d'hydrogène,
- $R_2$ représente :

+ un atome d'hydrogène;

+ un radical alkyle ou alkényle ayant jusqu'à 36 atomes de carbone et pouvant comporter un ou des enchaînements - O -, - S - , - CO - ou - COO - ;

+ un radical - CO - $R_5$, $R_5$ étant un radical alkyle ayant de 1 à 36 atomes de carbone ou un radical aryle éventuellement porteur d'un ou plusieurs substituants indiqués précédemment ;

+ un radical ,

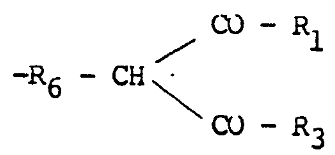

. $R_6$ étant un radical alkylène de 1 à 6 atomes de carbone ou un atome d'hydrogène,

. $R_1$ et $R_3$ ayant les significations indiquées précédemment,

+ un radical carbamoyle N-substitué de formule :

- OC - NH - $R_7$

dans laquelle $R_7$ est un radical aryle éventuellement porteur d'un ou plusieurs des substituants indiqués précédemment,

+ un radical de formule :

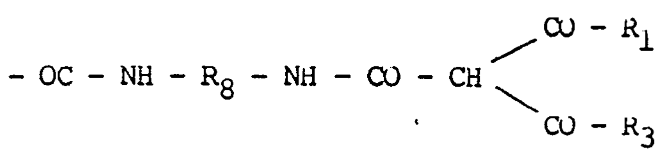

dans laquelle :

. $R_1$ et $R_3$ ont les significations indiquées précédemment

. $R_8$ représente :

- un radical arylène éventuellement porteur d'un ou plusieurs des substituants indiqués précédemment,
- un radical diphénylène méthane dont un cycle ou les 2 cycles sont éventuellement porteurs d'un ou plusieurs des substituants indiqués précédemment,

+ un radical de formule :

- COO - $R_9$

dans laquelle $R_9$ est un radical alkyle substitué ou non ayant de 1 à 36 atomes de carbone,

+ un radical de formule :

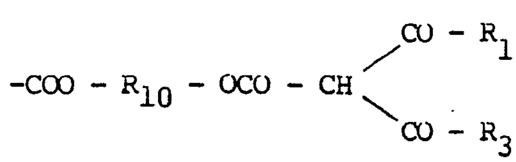

dans laquelle $R_1$ et $R_3$ ont les significations indiquées précédemment et $R_{10}$ représente un radical alkylène, linéaire ou ramifié substitué ou non par un ou des atomes d'halogène, ayant 1 à 20 atomes de carbone;

- les symboles $R_1$ et $R_3$ peuvent représenter ensemble un radical divalent ayant 2 à 5 atomes de carbone et pouvant comporter un atome d'oxygène, de soufre ou d'azote;

- les symboles $R_1$ et $R_2$ peuvent représenter ensemble un radical divalent tel que :

+ un radical alkylène ou alkénylène linéaire ou ramifié ayant de 3 à 36 atomes de carbone,

+ un radical aralkylène ayant de 7 à 36 atomes de carbone,

+ un radical arylène ou cycloaliphatique divalent ayant moins de 14 atomes de carbone, les radicaux cycloaliphatiques pouvant compter une ou plusieurs doubles liaisons carbone-carbone,

ces radicaux divalents peuvent être substitués par un ou plusieurs atomes d'halogène et les cycles aromatiques et cycloaliphatiques peuvent porter un ou plusieurs des substituants indiqués précédemment,

les parties aliphatiques des radicaux divalents précédents pouvent comporter un ou plusieurs atomes d'oxygène - O - ou de soufre - S - ou groupements - CO - ou - COO -,

- les divers radicaux représentés par $R_1$ et $R_3$ sont tels que les atomes de carbone directement liés aux groupements carbonyles de la formule (1) ne comportent pas de double liaison.

11°/ Procédé selon l'une quelconque des revendications 1 à 10 caractérisé en ce que l'on utilise au moins une β-dicétone ou β-cétoaldehyde choisi dans le groupe suivant :

l'heptanedione-2,4 ; la décanedione-2,4 ; la méthyl-2 décène-2-dione-6,6 ; la méthyl-2 nonène-2 dione-6,8 ; la stéaroylacétone ; la stéaroyl-1 octanone-2 ; le triacétylméthane ; le dioxo-7,9 décanoate d'éthyle ; la benzoylacétone; la benzoyl-1 octanone-2 ; la diphényl-1,4 butanedione-1,3 ; la stéaroylacetophenone ; la palmitoylacetophenone ; la benzoyl-1 methyl-4 pentanone-2 ; le benzoyl-octacosanoyl-méthane ; le bis(dioxo-2,4 butyl)-1,4 benzène ; le paraméthoxybenzoyl-stéaroyl-méthane ; l'allyl-2 phényl-1 butanedione-1,3 ; le méthyl-2 acétyl-2 acétaldéhyde ; le benzoylacétaldéhyde ; l'acétoacétyl cyclohexène-3 ; le bis(dioxo-2,6 cyclohexyl) méthane ; l'acétyl-2 oxo-1 tétrahydro-l,2,3,4 naphtalène; le palmitoyl-2 oxo-1 tétrahydro-1,2,3,4 naphtalène ; l'oxo-1 stéaroyl-2 tétrahydro-1,2,3,4 naphtalène ; l'acétyl-2 cyclohexanone-1 ; la benzoyl-2 cyclohexanone-1 ; l'acétyl-2 cyclohexanedione-1,3 ; le dibenzoylméthane ; le tribenzoylméthane ; le bis(paraméthoxybenzoyl) méthane ; la (N-phénylcarbamoyl)-1 benzoyl-1 acétone ; la (N-phénylcarbamoyl)-1 acétyl-l acétone, le diacétylacétohexane.

12°/ Procédé selon l'une des revendications 1 à 11, caractérisé en ce que l'on utilise en outre de 0,01 % à 5 % en poids de phosphite organique par rapport au polymère à stabiliser.

13°/ Procédé selon l'une des revendications 11 à 12, caractérisé en ce que l'on utilise en outre de 0,005 % à 1,5 % en poids de polyol par rapport au polymère à stabiliser.

14°/ Procédé selon la revendication 13, caractérisé en ce que le polyol utilisé est choisi parmi ceux qui possédent plus de 4 groupements hydroxyle dans leur molécule et les alcools polyvinyliques qui présentent une viscosité à 20°C, en solution aqueuse à 4 % en poids, comprise entre 4 x $10^{-3}$ et 60 x $10^{-3}$ Pascal.seconde.

15°/ Composition stabilisante pour la mise en oeuvre du procédé selon l'une quelconque des revendications 1 à 14 caractérisée en ce qu'elle comporte :

a) au moins un dérivé organique de lanthanide tel que défini dans les revendications 1 à 3 et 5 à 9,

b) au moins un dérivé organique du zinc ou du cadmium tel que défini dans les revendications 1, 2 et 4,

c) au moins l'un des stabilisants thermiques secondaires tels que définis dans les revendications 1, 10 et 11.

16°/ Composition selon la revendication 15, caractérisée en ce l'on prépare en une seule opération directement le mélange dérivé de lanthanide/dérivé du zinc ou dérivé de lanthanide/dérivé vu cadmium

17°/ Composition selon les revendications 15 et 16 caractérisée en ce que le rapport pondéral dérivé organique de lanthanide/dérivé organique du zinc ou du cadmium varie entre 0,2 et 5.

18°/ Polymère à base de chlorure de vinyle stabilisé par le procédé selon l'une des revendications 1 à 14.

19°/ Objets conformes prepares a l'aide des polymères à base de chlorure de vinyle stabilisés obtenus par le procédé selon l'une des revendications 1 à 14.

**Patentansprüche**

1. Verfahren zum Stabilisieren von Polymeren auf der Basis von Vinylchlorid, gekennzeichnet durch die gemeinsame Verwendung von:

a) 0,005 bis 5 Gew.-%, bezogen auf das Polymer, mindestens einer organischen Lanthanidverbindung ausgewählt aus:

- den Lanthanidsalzen von:

+ aliphatischen Monocarbonsäuren mit 2 bis 30 Kahlenstoffatomen oder Dicarbonsäuren mit 3 bis 30 Kohlenstoffatamen, gesättigt oder enthaltend eine oder mehrere ethylenische Doppelbindungen, die einen oder mehrere Substituenten enthalten können, wie Halogenatame, Hydroxylgruppen, Alkoxygruppen mit 1 bis 12 Kohlenstoffatomen, Mercaptogruppen, Phenyl-, Phenoxy-, Naphthyloder Cyclohexylgruppen, deren Ringe gegebenenfalls durch ein oder mehrere Halogenatome, Hydroxylgruppen, Alkylgruppen mit 1 bis 6 Kohlenstoffatomen oder Alkoxygruppen mit 1 bis 6 Kohlenstoffatcnken substituet sind;

+ Benzoesäure, 1-Naphtoesäure, 2-Naphtoesäure, Cyclopenan-carbonsäure, Cyclohexan-carbonsäure, Cyclopenten-carbonsäuren oder Cyclohexen-carbonsäuren, wobei die Ringe dieser Säuren einen oder mehrere Substituenten, wie Halogenatome, Hydroxylgruppen, Alkylgruppen mit 1 bis 12 Kohlenstoffatomen, Alkenylgruppen mit 2 bis 12 Kohlenstoffatomen, Alkoxygruppen mit 1 bis 12 Kohlenstoffatomen, Phenyl-,

Benzyl-, Phenoxy- oder Cyclohexylgruppen, Alkoxycarbonylgruppen mit 2 bis 24 Kohlenstoffatomen oder Alkenoxycarbonylgruppen mit 4 bis 24 Kohlenstoffatcmen enthalten können;

+ Alkylmonoestern mit 1 bis 24 Kohlenstoffatomen in der Alkylgruppe oder Alkenylmonoestern mit 3 bis 24 Kohlenstoffatomen in der Alkenylgruppe der oben angegebenen aliphatischen Dicarbonsäuren;

+ heterocyclischen Carbonsäuren, vor allen, abgeleitet von Pyridin, Furan, Thiophen, Pyrrol und Pyran, die einen oder mehrere Substituenten, wie Halogenatome, Hydraxylgruppen, Alkylgruppen mit 1 bis 12 Kohlenstoffatomen, Alkoxygruppen mit 1 bis 12 Kohlenstoffatomen, Alkenylgruppen mit 2 bis 12 Kohlenstoffatomen, Alkoxycarbonylgruppen mit 2 bis 24 Kohlenstoffatomen oder Alkenoxycarbonylgruppen mit 4 bis 24 Kohlenstoffatomen enthalten können;

- Lanthanidphenolaten, abgeleitet von Phenol, 1-Naphtol oder 2-Naphtol, deren cyclische Teile einen oder mehrere Substituenten, wie Halogenatome, Alkyloder Alkoxygruppen mit 1 bis 24 Kohlenstoffatomen Alkenylgruppe mit 2 bis 24 Kohlenstoffatomen, Phenyl-, Benzyl-, Phenoxy- oder Cyclohexylgruppen aufweisen können;

- Lanthanid-mercaptiden, vor allem abgeleitet von Thioglykolsäure oder Thioäpfelsäure oder deren Alkylestern mit 1 bis 12 Kohlenstoffatomen in der Alkylgruppe, Alkenylestern mit 2 bis 12 Kohlenstoffatomen in der Alkenylgruppe, Phenyl-, Benzyl-, Cyclohexyl-ester oder Ester von Alcandiolen mit 2 bis 12 Kohlenstoffatomen, Dihydroxybenzoe- oder Dihydroxycyclohexan-ester, wobei die cyclischen Teile dieser Ester mit einer oder mehreren Alkyl- oder Alkoxygruppen mit 1 bis 6 Kohlenstoffatomen substituiert sein können;

- Lanthanid-chelaten von β-Dicarbonylverbindungen der allgemeinen Formel (I):

$$R_1 - CO - CHR_2 - CO - R_3 \qquad (I),$$

in der:

- $R_1$ und $R_3$ gleich oder verschieden sind und bedeuten:

+ eine lineare oder verzweigte Alkylgruppe mit 1 bis 36 Kohlenstoffatomen, gegebenenfalls mit einem oder mehreren Halogenatomen substituiert,

+ eine lineare oder verzweigte Alkenylgruppe mit 3 bis 36 Kohlenstoffatomen, gegebenenfalls mit einem oder mehreren Halogenatomen substituiert,

+ einen Arylrest oder einen Arylrest, der an seinem, aromatischen Ring einen oder mehrere Substituenten trägt, wie:

. Alkylreste mit 1 bis 6 Kohlenstoffatomen, gegebenenfalls substituiert mit einem oder mehreren Halogenatomen,

. Alkenylreste mit 2 bis 6 Kohlenstoffatonen, gegebenenfalls substituiert mit einem oder mehreren Halogenatomen,

. Nitrogruppe, -CHO-Gruppe oder -COOH-Gruppe,

. Alkoxygruppen mit 1 bis 6 Kohlenstoffatomen,

. $-CCOR_4$-Gruppen, wobei $R_4$ ein Alkylrest mit 1 bis 12 Kohlenstoffatomen oder ein Alkenylrest mit 2 bis 12 Kohlenstoffatomen ist,

. OH-Gruppe, Halogenatome,

+ einen Aralkylrest, dessen aliphatischer Teil 1 bis 12 Kohlenstoffatome enthält und dessen cyclischer Teil einen oder mehrere der zuvor angegebenen Substituenten tragen kann,

+ einen cycloaliphatischen Rest mit 5 bis 12 Kohlenstoffatomen, dessen cyclischer Teil eine oder mehrere Kohlenstoff-Kohlenstoffdoppelbindungen aufweisen und einen oder mehrere der zuvor genannten Substituenten tragen kann,

+ eine Verknüpfung von mehreren der zuvor genannten Reste, wobei die zuvor definierten aliphatischen Reste einen oder mehrere Sauerstoffatome -O- oder Schwefelatome -S- oder Carbonylgruppen -CO. oder Carboxylatgruppe -COO- enthalten können;

- $R_2$ ein Wasserstoffatom bedeutet;

b) 0,01 bis 1 Gew.-%, bezogen auf das Polymer, mindestens einer organischen Zink- oder Cadmiumverbindung ausgewählt aus:

- den Zink- oder Cadmiumsalzen von Carbonsäuren, von denen sind die zuvor genannten Lanthanidsalze ableiten;

- den Zink- oder Cadmiumphenolaten der Phenole, von denen sich die zuvor genanten Lanthanidphenolate ableiten;

- den Zink- oder Cadmiummercaptiden der Thiocarbonsäuren, von denen sioh die zuvor genannten Lanthanidmercaptide ableiten;

- den Zink- oder Cadmiumchelaten der β-Dicarbonylverbindungen, von denen sich die zuvor genannten

Lanthanidchelate ableiten,

c) mindestens eines der folgenden sekundären Hitzestabilisatoren:

- β-Diketone oder β-Ketoaldehyde,
- Aminocrotonsäureester,
- 2-Phenylindol und seine Derivate,
- 1,4-Dihydro-2,6-dimethyl-3,5-dialkoxycarbonylpyridine,
- Thioglykolsäureester,
- Thioäpfelsäure-diester,
- β-Ketoester,
- 1,3-Dialkyl-6-amino-uracile,
- 1,3-Dialkyl-6-amino-2-thiouracile.

2. Verfahren nach Anspruch 1,
dadurch gekennzeichnet, daß man verwendet:

a) mindestens eine organische Lanthanidverbindung ausgewählt aus:

- Lanthanidsalzen von

+ aliphatischen Monocarbonsäuren mit 6 bis 24 Kohlenstoffatomen, gesättigt oder mit einer ethylenischen Doppelbindung, die einen oder mehrere Substituenten aufweisen können, wie Chloratome, Hydraxylgruppen, Alkoxygruppen mit 1 bis 6 Kohlenstoffatomen, Phenyl-, Phenoxy- oder Cyclohexylgruppen, wobei diese cyclischen Gruppen gegebenenfalls mit einem oder mehreren Chloratomen, Hydroxylgruppen, Alkyl- oder Alkoxygruppen mit 1 bis 6 Kohlenstoffatomen substituiert sind;

Mercaptomonocarbonsäuren mit 2 bis 6 Kohlenstoffatomen oder Mercaptodicarbonsäuren mit 3 bis 6 Kohlenstoffatomen;

+ Benzoesäure oder Cyclohexancarbonsäure, deren cyclischer Teil einen oder mehrere Substituenten, wie Chloratome, Hydroxylgruppen Alkyl- oder Alkoxygruppen mit 1 bis 6 Kohlenstoffatomen oder Alkoxycarbonylgruppen mit 2 bis 12 Kohlenstoffatomen enthalten kann;

+ Monoalkylestern mit 1 bis 12 Kohlenstoffatomen in der Alkylgruppe von aliphatischen Dicarbonsäuren mit 4 bis 24 Kohlenstoffatomen, gesättigt oder mit einer ethylenischen Doppelbindung, die einen oder mehrere Substituenten, wie Chloratome, Hydroxylgruppen, Mercaptogruppen oder Alkoxygruppen mit 1 bis 6 Kohlenstoffatomen aufweisen können;

+ Phenylalkylcarbonsäuren, deren Alkylteil 1 bis 4 Kohlenstoffatome aufweist und deren cyclischer Teil einen oder mehrere Substituenten tragen kann, wie Chloratome, Hydroxylguppen, Alkyl- oder Alkoxygruppen mit 1 bis 6 Kohlenstoffatomen;

- Lanthanid-phenolaten, abgeleitet von Phenol, dessen Ring einen oder mehrere Substituenten, wie Chloratome, Alkyl- oder Alkoxygruppen mit 1 bis 12 Kohlenstoffatomen, Phenyl-, Benzyl-, Phenoxy- oder Cyclohexylgruppen aufweisen kann.

b) mindestens eine organische Zink- oder Cadmiumverbindung ausgewählt aus:

- Zink- oder Cadmiumsalzen von:

+ aliphatischen Monocarbonsäureen mit 6 bis 24 Kohlenstoffatomen, gesättigt oder mit einer ethylenischen Doppelbindung , die einen oder mehrere Substituenten aufweisen können, wie Chloratome, Hydroxylgruppen, Alkoxygruppen mit 1 bis 6 Kohlenstoffatomen, Phenyl-, Phenoxy- oder Cyclohexylgruppen, wobei diese cyclischen Gruppen gegebenenfalls mit einen, oder mehreren Chloratomen, Hydroxylgruppen, Alkyl- oder Alkoxygruppen mit 1 bis 6 Kohlenstoffatomen substituiert sind;

+ Mercaptomonocarbonsäuren mit 2 bis 6 Kohlenstoffatomen oder Mercaptodicarbonsäuren mit 3 bis 6 Kohlenstoffatomen;

+ Benzoesäure oder Cyclohexan-carbonsäure, deren cyclischer Teil einen oder mehrere Substituenten, wie Chloratome, Hydroxylgruppen Alkyl- oder Alkoxygruppen mit 1 bis 6 Kohlenstoffatomen oder Alkoxycarbonylgruppen mit 2 bis 12 Kohlenstoffatomen enthalten kann;

+ Monoalkylestern mit 1 bis 12 Kohlenstoffatomen in der Alkylgruppe von aliphatischen Dicarbonsäuren mit 4 bis 24 Kohlenstoffatomen, gesättigt oder mit einer ethylenischen Doppelbindung, die einen oder mehrere Substituenten, wie Chloratome, Hydroxylgruppen, Mercaptogruppen oder Alkoxygruppen mit 1 bis 6 Kohlenstoffatomen aufweisen können;

+ Phenylalkylcarbonsäuren, deren Alkylteil 1 bis 4 Kohlenstoffatome aufweist und deren cyclischer Teil einen oder mehrere Substituenten tragen kann, wie Chloratome, Hydroxylgruppen, Alkyl- oder Alkoxygruppen mit 1 bis 6 Kohlenstoffatomen;

- Zink - und Cadmiumphenolaten, abgeleitet von Phenol, dessen Ring einen oder mehrere Substituenten, wie Chloratome , Alkyl- oder Alkoxygruppen mit 1 bis 12 Kohlenstoffatomen, Phenyl-, Benzyl-, Phenoxy- oder Cyclohexylgruppen aufweisen kann.

3. Verfahren nach einem der Ansprüche 1 oder 2,
dadurch gekennzeichnet, daß man 0,05 bis 3 Gew.-% organische Lanthanidverbindung verwendet, bezogen auf das Polymer auf Basis von Vinylchlorid.

4. Verfahren nach einem der Ansprüche 1 bis 3,
dadurch gekennzeichnet, daß man 0,02 bis 0,5 Gew.-% organische Zink- oder Cadmiumverbindung verwendet, bezogen auf das Polymer auf Basis von Vinylchlorid.

5. Verfahren nach einem der Ansprüche 1 bis 4,
dadurch gekennzeichnet, daß die organische Lanthanidverbindung eine organische Cerverbindung oder ein

Gemisch von organischen Verbindungen von Cer und einem oder mehreren der anderen Lanthanide ist.

6. Verfahren nach einem der Ansprüche 1 bis 4,

dadurch gekennzeichnet, daß die organische Lanthanidverbindung eine organische Lanthanverbindung oder ein Gemisch von organischen Verbindungen von Lanthan und einem oder mehreren der anderen Lanthanide ist, ausgewählt aus Praseodym, Neodym, Samarium, Europium, Gadolium, Terbium, Dysprasium, Holmium, Erbium, Ytterbium, Thulium, Lutetium und Yttrium.

7. Verfahren nach einem der Ansprüche 1 bis 4,

dadurch gekennzeichnet, daß die organische Lanthanidverbindung eine organische Praseodymverbindung oder ein Gemisch von organischen Verbindunggen von Praseodym und einem oder mehreren der anderen Lanthanide ist, ausgewählt aus Neodym, Samarium, Europium, Gadolinium, Terbium, Dysprosium, Holmium, Erbium, Ytterbium, Thulium, Lutetium und Yttrium.

8. Verfahren nach einem der Ansprüche 1 bis 4,

dadurch gekennzeichnet, daß die organische Lanthanidverbindung eine organische Neodymverbindung oder ein Gemisch von organischen Verbindungen von Neodym und einem oder mehreren der anderen Lanthanide ist, ausgewählt aus Samerium, Europium, Gedolinium, Terbium, Dysprosium, Holmium, Erbium, Ytterbium, Thulium, Lutetium und Yttrium.

9. Verfahren nach einem der Ansprüche 5 bis 8,

dadurch gekennzeichnet, daß das Cer und/oder Lanthan und/ oder Preseodym und/oder Neodym mindestens 40 mol-% der Gesamtmenge der Lanthanide ausmacht.

10. Verfahren nach einem der Ansprüche 1 bis 9,

dadurch gekennzeichnet, daß man mindestens ein β-Diketon oder einen β-Ketoaldehyd der allgemeinen Formel (I):

$R_1$ - CO - $CHR_2$ - CO - $R_3$ (I),

in der:

$R_1$ und $R_3$ gleich oder verschieden sind und bedeuten:

+ eine lineare oder verzweigte Alkylgruppe mit 1 bis 36 Kohlenstoffatomen, gegebenenfalls mit einem oder mehreren Halogenatomen substituiert,

+ eine lineare oder verzweigte Alkenylgruppe mit 3 bis 36 Kohlenstoffatomen, gegebenenfalls mit einem oder mehreren Halogenatomen substituiert,

+ einen Arylrest oder einen Arylrest, der an seinem aromatischer Ring einen oder mehrere Substituenten trägt, wie:

. Alkylreste mit 1 bis 6 Kohlenstoffatomen, gegebenenfalls substituiert mit einem oder mehreren Halogenatomen,

. Alkenylreste mit 2 bis 6 Kohlenstoffatomen, gegebenenfalls substituiert mit einem oder mehreren Halogenatomen,

. Nitrogruppe, -CHO-Gruppe oder -COOH-Gruppe,

. Alkoxygruppen mit 1 bis 6 Kohlenstoffatomen,

. -$COOR_4$-Gruppen, wobei $R_4$ ein Alkylrest mit 1 bis 12 Kohlenstoffatomen oder ein Alkenylrest mit 2 bis 12 Kohlenstoffatomen ist,

. OH-Gruppe, Halogenatome,

+ einen Aralkylrest, dessen aliphatischer Teil 1 bis 12 Kolenstoffatome enthält und dessen cyclischer Teil einen oder mehrere der zuvor angegebenen Substituenten tragen kann,

+ einen cycloaliphatischen Rest mit 5 bis 12 Kohleenstoffatomen, dessen cyclischer Teil eine oder mehrere Kohlenstoff-Kohlenstoffdoppelbindungeen aufweisen und einen oder mehrere der zuvor genannten Substituenten tragen kann,

+ eine Verknüpfung von mehreren der zuvor genannten Reste,

wobei die zuvor definierten aliphatisahen Reste einen oder mehrere Sauerstoffatome -O- oder Schwefelatome -S- oder Cerbonylgruppen -COoder Carboxylatgruppe -COO- enthalten können;

- einer der Reste $R_1$ oder $R_3$ ein Wasserstoffatom sein kann,

- $R_2$ bedeutet:

+ ein Wasserstoffatom;

+ eine Alkyl- oder Alkenylgruppe mit bis zu 36 Kohlenstoffatomen, die oder mehrere Gruppierungen - O -, - S -, - CO - oder - COO - enthalten kann;

+ einen Rest -CO-$R_5$, wobei $R_5$ eine Alkylgruppe mit 1 bis 36 Kohlenstoffatomen oder eine Arylgruppe ist, die gegebenenfalls einen oder mehrere der zuvor genannten Substituenten trägt;

+ einen Rest

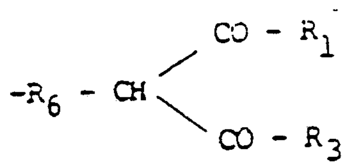

wobei $R_6$ eine Alkylengruppe mit 1 bis 6 Kohlenstoffatomen oder ein Wasserstoffatom ist und $R_1$ und $R_3$ die zuvor angegebenen Bedeutungen haben;
+ einen N-substituierten Carbamoylrest der Formel

$$- OC - NH - R_7 ,$$

in der $R_7$ ein Arylrest ist, der gegebenenfalls einen oder mehrere der zuvor genannten Substituenten trägt;
+ einen Rest der Formel

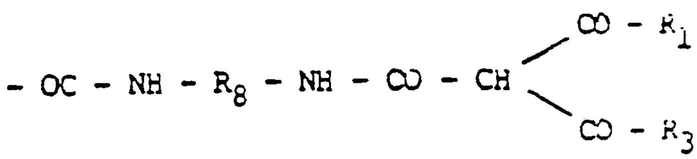

in der $R_1$ und $R_3$ die zuvor angegebenen Bedeutungen haben und $R_8$ eine Arylengruppe, die gegebenefalls einen oder mehrere der zuvor genannten Substituenten trägt, oder eine Diphenylenmethangruppe bedeutet, bei der ein Ring oder beide Ringe gegebenenfalls einen oder mehrere der zuvor genannten Substituenten trägt;
+ einen Rest der Formel

$$- COO - R_9 ,$$

in der $R_9$ eine gegebenenfalls substituierte Alkylgruppe mit 1 bis 36 Kohlenstoffatomen ist;
+ einen Rest der Formel

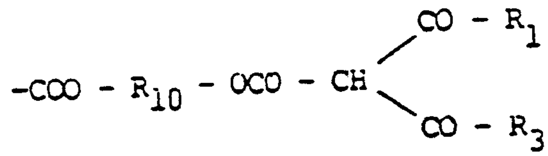

in der $R_1$ und $R_3$ die zuvor angegebenen Bedeutungen haben und $R_{10}$ eine lineare oder verzweigte Alkylengruppe bedeutet, die gegebenenfalls mit einem oder mehreren Halogenatomen substituiert ist und 1 bis 20 Kohlenstoffatome aufweist;

- die Substituenten $R_1$ und $R_3$ zusammen einen zweiwerten Rest mit 2 bis 5 Kohlenstoffatonen bilden können, der ein Sauerstoff-, Schwefel- oder Stickstoffatom enthalten kann;
- die Substituenten $R_1$ und $R_2$ zusammen einen zweiwertigen Rest bilden können wie
  + einen linearen oder verzweigten Alkylen- oder Alkenylenrest mit 3 bis 36 Kohlenstoffatonen,
  + einen Aralkylenrest mit 7 bis 36 Kohlenstoffatomen,
  + einen Aralkylenrest oder zweiwertigen cycloaliphatischeen Rest mit weniger als 14 Kohlenstoffatomen,

wobei die cycloaliphatischen Reste eine oder mehrere Kohlen-Kohlenstoffdoppelbindungen enthalten können und

diese zweiwertigen Reste mit einem oder mehreren Halogenatomen substituiert sein können und die aromatischen und cycloaliphatischen Ringe einen oder mehrere der zuvor angegebenen Substituenten tragen können und

die aliphatischen Teile der genannten zweiwertigen Reste ein oder mehrere Sauerstoffatame -O- oder Schwefelatome -S- oder Gruppen -CO- oder -CCO- enthalten können;

- die verschiedenen Reste $R_1$ und $R_3$ so beschaffen sind, daß die beiden Kohlenstoffatome, die direkt an die Carbonylgruppen der Formel (I) gebunden sind, keine Doppelbindung aufweisen,

verwendet.

11. Verfahren nach einem der Ansprüche 1 bis 10,
dadurch gekennzeichnet, daß man mindestens ein β-Diketon oder einen β-Ketoaldehyd verwendet, ausgewählt aus der folgenden Gruppe: 2,4-Heptan-dion, 2,4-Deoandion, 2-Methyl-2-dion-6,8-dion, 2-Methyl-2-nonen-6,8-dion, Stearoylaceton, 1-Stearoyl-2-octanon, Triacetylmethan, Ethyl-7,9-dioxodecanoat, Benzoylaceton, 1-Benzoyl-2-octenon, 1,4-Diphenyl-1,3-butendion, Stearoylacetophenon, Palmitoylacetophenon, 1-Benzoyl-4-methyl-2-pentanon, Benzoyl-octacosanoyl-methan, 1,4-Bis(2,4-dioxobutyl)benzol, p-Methoxybenzoyl-stearoylmethan, 2 Allyl-1-phenyl-1,3-butandion, 2-Methyl-2-acetyl-acetaldehyd, Benzoylacetaldehyd, Acetoacetyl-3-cyclohexen, Bis(2,6-dioxocyclohexyl)methan, 2-Acetyl-1-oxo-1,2,3,4-tetrahydronaphthalin, 2-Palmitoyl-1-oxo-1,2,3,4-tetrahydronaphthalin, 1-Oxo-2-stearoyl-1,2,3,4-tetrahydronathalin, 2 Acetyl-1-cyclohexanon, 2-Ben-zoyl-1-cyclohexanon, 2-Acetyl-1,3-cyclohexandion, Dibenzoylmethan, Tribenzoylmethan, Bis(p-methoxybenzoyl)methan, 1-(N-Phenylcarbomoyl)1-benzoylaceton, 1-(N-Phenylcarbamoyl)1-acetylaceton, Diacetylacetohexan.

12. Verfahren nach einem der Ansprüche 1 bis 11,
dadurch gekennzeichnet, daß man zusätzlich 0,01 bis 5 Gew.-% organisches Phosphit verwendet, bezogen auf das zu stabilisierende Polymer.

13. Verfahren nach einem der Ansprüche 11 oder 12,
dadurch gekennzeichnet, daß man zusätzlich 0,005 bis 1,5 Gew.-% Polyol verwendet, bezogen auf das zu stabilisierende Polymer.

14. Verfahren nach Anspruch 13,
dadurch gekennzeichnet, daß das verwendete Polyol ausgewählt wird aus den Polyolen mit mehr als vier Hydroxylgruppen im Molekül und den Pollyvinylalkoholen, die bei 20°C in 4 gew.-%iger wäßriger Lösung eine Viskosität von $4 \times 10^{-3}$ bis $60 \times 10^{-3}$ Pa.s aufweisen.

15. Stabilisatorgemisch für die Durchfürung des Verfahrens nach einem der Ansprüche 1 bis 14,
dadurch gekennzeichnet, daß es enthält:
a) mindestens eine organische Lanthanidverbindung wie in den Ansprüchen 1 bis 3 und 5 bis 9 definiert,
b) mindestens eine organische Zink- oder Cadmiumverbindung wie in den Ansprüchen 1, 2 und 4 definiert,
c) mindestens einen der sekundären Hitzestabilisatoren wie in den Ansprüchen 1, 10 und 11 definiert.

16. Gemisch nach Anspruch 15,
dadurch gekennzeichnet, daß man in einem einzigen Arbeitsgang direkt das Gemisch aus Lanthanidverbindung/Zinkverbindung oder Lanthanidverbindung/Cadmiumverbindung herstellt.

17. Gemisch nach Anspruch 15 und 16,
dadurch gekennzeichnet, daß das Gewichtsverhältnis von organischer Lanthanidverbindung zu organischer

Zink- oder Cadmiumverbindung zwischen 0,2 und 5 liegt.

18. Polymer auf Basis von Vinylchlorid, stabilisiert durch das Verfahren nach einem der Ansprüche 1 bis 14.

19. Formkörper, hergestellt mit Hilfe der durch das Verfahren nach einem der Ansprüche 1 bis 14 erhaltenen stabilisierten Polymeren auf Basis von Vinylchlorid.

**Claims**

1. Process for stabilization of polymers based on vinyl chloride characterized by the conjoint use of

a) 0.005% to 5% by weight relative to the polymer of at least one organic lanthanide derivative chosen from:

lanthanide salts:

of monocarboxylic aliphatic acids having from 2 to 30 carbon atoms or dicarboxylic aliphatic acids having from 3 to 30 carbon atoms, the acids being saturated or containing one or more ethylenic double bonds and being able to contain one or more substituents such as halogen atoms, hydroxyl groups, alkoxy groups having from 1 to 12 carbon atoms, mercapto groups or phenyl, phenoxy, naphthyl or cyclohexyl groups in which the rings are optionally substituted with one or more halogen atoms, hydroxyl groups, alkyl groups having 1 to 6 carbon atoms or alkoxy groups having 1 to 6 carbon atoms,;

of benzoic, 1-naphthoic, 2-naphthoic, cyclopentanecarboxylic, cyclohexanecarboxylic, cyclopentenecarboxylic or cyclohexenecarboxylic acids, the cyclic portions of these acids being able to contain one or more substituents such as halogen atoms, hydroxyl groups, alkyl groups having 1 to 12 carbon atoms, alkenyl groups having 2 to 12 carbon atoms, alkoxy groups having 1 to 12 carbon atoms, phenyl, benzyl, phenoxy or cyclohexyl groups, alkoxycarbonyl groups having 2 to 24 carbon atoms or alkenoxycarbonyl groups having 4 to 24 carbon atoms;

of alkyl monoesters (the alkyl group having 1 to 24 carbon atoms) or alkenyl monoesters (the alkenyl group having 3 to 24 carbon atoms) of the dicarboxylic aliphatic acids mentioned above;

of heterocyclic carboxylic acids, in particular those derived from pyridine, furan, thiophene, pyrrole and pyran, which acids can contain one or more substituents such as halogen atoms, hydroxyl groups, alkyl groups having 1 to 12 carbon atoms, alkoxy groups having 1 to 12 carbon atoms, alkenyl groups having 2 to 12 carbon atoms, alkoxycarbonyl groups having 2 to 24 carbon atoms or alkenoxycarbonyl groups having 4 to 24 carbon atoms;

lanthanide phenolates derived from phenol, 1-naphthol or 2-naphthol, in which the cyclic portions can contain one or more substituents such as halogen atoms, alkyl or alkoxy groups having 1 to 24 carbon atoms, alkenyl groups having 2 to 24 carbon atoms, or phenyl, benzyl, phenoxy or cyclohexyl groups;

lanthanide mercaptides, in particular those derived from thioglycolic or thiomalic acid and their alkyl esters (the alkyl radical having 1 to 12 atoms), alkenyl esters (the alkenyl radical having 2 to 12 carbon atoms), phenyl, benzyl and cyclohexyl esters, and esters of alkanediol (having from 2 to 12 carbon atoms), of dihydroxybenzene and of dihydroxycyclohexane, the cyclic portions of the said esters being able to be substituted with one or more alkyl or alkoxy radicals having from 1 to 6 carbon atoms;

lanthanide chelates of β-dicarbonyl compounds, in particular those derived from the compounds of general formula (I):

$R_1$-CO-$CHR_2$-CO-$R_3$ (I)

in which:

$R_1$ and $R_3$, which may be identical or different, denote:.

a linear or branched alkyl group having 1 to 36 carbon atoms and optionally substituted with one or more halogen atoms,

a linear or branched alkenyl group having 3 to 36 carbon atoms and optionally substituted with one or more halogen atoms,

an aryl radical or an aryl radical bearing one or more substituents on the aromatic ring, such as:

. alkyl radicals having 1 to 6 carbon atoms and optionally substituted with one or more halogen atoms,

. alkenyl radicals having 2 to 6 carbon atoms and optionally substituted with one or more halogen atoms,

. a nitro group,

. a -CHO group,

. a -COOH group,

. alkoxy groups having 1 to 6 carbon atoms,

. -$COOR_4$ groups, R4 being an alkyl radical having 1 to 12 carbon atoms or an alkenyl radical having 2 to 12 carbon atoms,

. an OH group,

. halogen atoms,

an aralkyl radical in which the aliphatic portion contains from 1 to 12 carbon atoms and in which the cyclic portion can contain one or more of the substituents mentioned above, a cycloaliphatic radical containing from 5 to 12 carbon atoms and in which the cyclic portion can contain one or more carbon-carbon double bonds and bear one or more of the substituents mentioned above,

an arrangement of several of the radicals mentioned above,

the different aliphatic radicals defined above being able to contain one or more oxygen -O- or sulphur -S-

atoms or carbonyl -CO- or carboxylate -COO- groups,;

$R_2$ denotes a hydrogen atom;

b) 0.01% to 1% by weight relative to the polymer of at least one organic zinc or cadmium derivative chosen from:

zinc or cadmium salts of the carboxylic acids from which the lanthanide salts mentioned above are derived;

zinc or cadmium phenolates of the phenols from which the lanthanide phenolates mentioned above are derived;

zinc or cadmium mercaptides of thiocarboxylic acids from which the lanthanide mercaptides mentioned above are derived;

zinc or cadmium chelates of the β-dicarbonyl compounds from which the lanthanide chelates mentioned above are derived;

c) at least one of the following secondary heat stabilizers:

β-diketones or β-ketoaldehydes,

aminocrotonic acid esters,

2-phenylindole and its derivatives,

1,4-dihydro-2,6-dimethyl-3,5-bis(alkoxycarbonyl)-pyridines,

thioglycolic acid esters,

thiomalic acid diesters,

β-keto esters,

1,3-dialkyl-6-aminouracils,

1,3-dialkyl-6-amino-2-thiouracils.

2. Process according to Claim 1, characterized in that the following are used:

a) at least one organic lanthanide derivative chosen from:

lanthanide salts:

of monocarboxylic aliphatic acids having from 6 to 24 carbon atoms, the acids being saturated or possessing an ethylenic double bond and being able to contain one or more substituents such as chlorine atoms, hydroxyl groups, alkoxy groups having from 1 to 6 carbon atoms, or phenyl, phenoxy -or cyclohexyl groups, these cyclic groups optionally being substituted with one or more chlorine atoms, hydroxyl groups or alkyl or alkoxy groups having 1 to 6 carbon atoms;

of mercaptomonocarboxylic acids having from 2 to 6 carbon atoms or mercaptodicarboxylic acids having from 3 to 6 carbon atoms;

of benzoic or cyclohexanecarboxylic acjds in which the cyclic portion can contain one or more substituents such as chlorine atoms, hydroxyl groups, alkyl or alkoxy groups having 1 to 6 carbon atoms or alkoxycarbonyl groups having 2 to 12 carbon atoms;

of alkyl monoesters (the alkyl group having 1 to 12 carbon atoms) of dicarboxylic aliphatic acids having 4 to 24 carbon atoms, the acids being saturated or possessing an ethylenic double bond and being able to contain one or more substituents such as chlorine atoms, hydroxyl groups, mercapto groups or alkoxy groups having 1 to 6 carbon atoms;

of phenylalkylcarboxylic acids in which the alkyl portion possesses from 1 to 4 carbon atoms and the cyclic portion can contain one or more substituents such as chlorine atoms, hydroxyl groups or alkyl or alkoxy groups having 1 to 6 carbon atoms;

lanthanide phenolates derived from phenol in which the ring can contain one or more substituents such as chlorine atoms or alkyl or alkoxy groups having 1 to 12 carbon atoms, or phenyl, benzyl, phenoxy or cyclohexyl groups;

b) at least one organic zinc or cadmium derivative chosen from:

zinc or cadmium salts:

of monocarboxylic aliphatic acids having from 6 to 24 carbon atoms, the acids being saturated or possessing an ethylenic double bond and being able to contain one or more substituents such as chlorine atoms, hydroxyl groups, alkoxy groups having 1 to 6 carbon atoms, or phenyl, phenoxy or cyclohexyl groups, these cyclic groups optionally being substituted with one or more chlorine atoms, hydroxyl groups or alkyl or alkoxy groups having 1 to 6 carbon atoms;

of mercaptomonocarboxylic acids having from 2 to 6 carbon atoms or mercaptodicarboxylic acids having from 3 to 6 carbon atoms;

of benzoic or cyclohexanecarboxylic acids in which the cyclic portion can contain one or more substituents such as chlorine atoms, hydroxyl groups, alkyl or alkoxy groups having 1 to 6 carbon atoms or alkoxycarbonyl groups having 2 to 12 carbon atoms;

of alkyl monoesters (the alkyl group having 1 to 12 carbon atoms) of dicarboxylic aliphatic acids having 4 to 24 carbon atoms, the acids being saturated or possessing an ethylenic double bond and being able to contain one or more substituents such as chlorine atoms, hydroxyl groups, mercapto groups or alkoxy groups having 1 to 6 carbon atoms;

of phenylalkylcarboxylic acids in which the alkyl portion possesses from 1 to 4 carbon atoms and the cyclic portion can contain one or more substituents such as chlorine atoms, hydroxyl groups or alkyl or alkoxy groups having 1 to 6 carbon atoms;

zinc or cadmium phenolates derived from phenol in which the ring can contain one or more substituents such as chlorine atoms, alkyl or alkoxy groups having 1 to 12 carbon atoms or phenyl, benzyl, phenoxy or cyclohexyl

groups.

3. Process according to either of Claims 1 and 2, characterized in that from 0.05 to 3% by weight of organic lanthanide derivative is used relative to the polymer based on vinyl chloride.

4. Process according to any one of Claims 1 to 3, characterized in that from 0.02% to 0.5% by weight of organic zinc or cadmium derivative is used relative to the polymer based on vinyl chloride.

5. Process according to any one of Claims 1 to 4, characterized in that the organic lanthanide derivative is an organic cerium derivative or a mixture of organic derivatives of cerium and one or more other lanthanides.

6. Process according to any one of Claims 1 to 4, characterized in that the organic lanthanide derivative is an organic lanthanum derivative or a mixture of organic derivatives of lanthanum and one or more other lanthanides chosen from praseodymium, neodymium, samarium, europium, gadolinium, terbium, dysprosium, holmium, erbium, ytterbium, thulium, lutetium and yttrium.

7. Process according to any one of Claims 1 to 4, characterized in that the organic lanthanide derivative is an organic praseodymium derivative or a mixture of organic derivatives of praseodymium and one or more other lanthanides chosen from neodymium, samarium, europium, gadolinium, terbium, dysprosium, holmium, erbium, ytterbium, thulium, lutetium and yttrium.

8. Process according to any one of Claims 1 to 4, characterized in that the organic lanthanide derivative is an organic neodymium derivative or a mixture of organic derivatives of neodymium and one or more other lanthanides chosen from samarium, europium, gadolinium, terbium, dysprosium, holmium, erbium, ytterbium, thulium, lutetium and yttrium.

9. Process according to any one of Claims 5 to 8, characterized in that cerium and/or lanthanum and/or praseodymium and/or neodymium represent at least 40 mole % of the total lanthanides.

10. Process according to any one of Claims 1 to 9, characterized in that at least one β-diketone or one β-ketoaldehyde of general formula (I) is used:

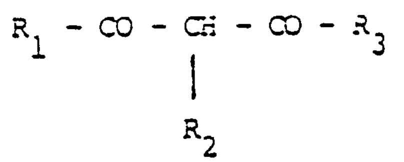

(I)

in which:

$R_1$ and $R_3$, which may be identical or different, denote:

a linear or branched alkyl group having 1 to 36 carbon atoms and optionally substituted with one or more halogen atoms,

a linear or branched alkenyl group having 3 to 36 carbon atoms and optionally substituted with one or more halogen atoms,

an aryl radical or an aryl radical bearing one or more substituents on the aromatic ring, such as:

. alkyl radicals having 1 to 6 carbon atoms and optionally substituted with one or more halogen atoms,

. alkenyl radicals having 2 to 6 carbon atoms and optionally substituted with one or more halogen atoms,

. a nitro group,

. a -CHO group,

. a -COOH group,

. alkoxy groups having 1 to 6 carbon atoms,

. $-COOR_4$ groups, $R_4$ being an alkyl radical having 1 to 12 carbon atoms or an alkenyl radical having 2 to 12 carbon atoms,

. an OH group,

. halogen atoms,

an aralkyl radical in which the aliphatic portion contains from 1 to 12 carbon atoms and in which the cyclic portion can contain one or more of the substituents mentioned above,

a cycloaliphatic radical containing from 5 to 12 carbon atoms and in which the cyclic portion can contain one or more carbon-carbon double bonds and bear one or more of the substituents mentioned above,

an arrangement of several of the radicals mentioned above,

the different aliphatic radicals defined above being able to contain one or more oxygen -O- or sulphur -S- atoms or carbonyl -CO- or carboxylate -COO- groups;

one of the radicals $R_1$ or $R_3$ can denote a hydrogen atom;

$R_2$ denotes:

a hydrogen atom;

an alkyl or alkenyl radical having up to 36 carbon atoms and being able to contain one or more -O-, -S-, -CO- or -COO-linkages;

a radical -CO-$R_5$, $R_5$ being an alkyl radical having from 1 to 36 carbon atoms or an aryl radical optionally bearing one or more substituents mentioned above;

a radical

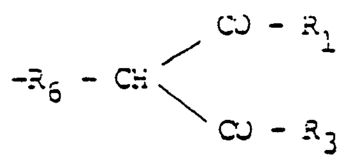

. $R_6$ being an alkylene radical having 1 to 6 carbon atoms or a hydrogen atom,

. $R_1$ and $R_3$ having the meanings stated above,

an N-substituted carbamoyl radical of formula:

-OC-NH-$R_7$

in which $R_7$ is an aryl radical optionally bearing one or more of the substituents mentioned above;

a radical of formula:

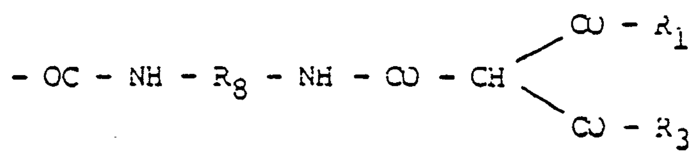

in which:

. $R_1$ and $R_3$ have the meanings stated above

. $R_8$ denotes:

an arylene radical optionally bearing one or more of the substituents mentioned above,

a diphenylenemethane radical in which one ring or both rings optionally bear one or more of the substituents mentioned above,

a radical of formula:

-COO-$R_9$

in which $R_9$ is a substituted or unsubstituted alkyl radical having from 1 to 36 carbon atoms;

a radical of formula:

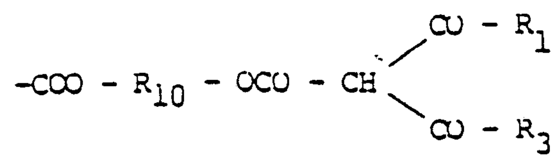

in which $R_1$ and $R_3$ have the meanings stated above and $R_{10}$ denotes a linear or branched alkylene radical which may or may not be substituted with one or more halogen atoms and having 1 to 20 carbon atoms;

the symbols $R_1$ and $R_3$ can denote together a divalent radical which has 2 to 5 carbon atoms and can contain an oxygen, sulphur or nitrogen atom;

the symbols $R_1$ and $R_2$ can denote together a divalent radical such as:

a linear or branched alkylene or alkenylene radical having from 3 to 36 carbon atoms,

an aralkylene radical having from 7 to 36 carbon atoms,

a divalent arylene or cycloaliphatic radical having fewer than 14 carbon atoms, the cycloaliphatic radicals being able to include one or more carbon-carbon double bonds,

these divalent radicals can be substituted with one or more halogen atoms and the aromatic and cycloaliphatic rings can bear one or more of the substituents mentioned above,

the aliphatic portions of the above divalent radicals can incorporate one or more oxygen -Oor sulphur -S- atoms or -CO- or -COO- groups;

the various radicals represented by $R_1$ and $R_3$ are such that the two carbon atoms directly linked to the carbonyl groups of the formula (I) do not incorporate a double bond.

11. Process according to any one of Claims 1 to 10, characterized in that at least one β-diketone or βketoaldehyde chosen from the following group is used:

2,4-heptanedione, 2,4-decanedione, 2-methyl-2-decene-6,8-dione, 2-methyl-2-nonene-6,8-dione; stearoylacetone; 1-stearoyl-2-octanone; triacetylmethane; ethyl 7,9-dioxo-decanoate; benzoylacetone, 1-benzoyl-2-octanone; 1,4-di-phenyl-1,3-butanedione; stearoylacetophenone; palmitoylacetophenone, 1-benzoyl-4-methyl-2-pentanone; benzoyl(octacosanoyl)methane; 1,4-bis(2,4-dioxobutyl)benzene; para-methoxybenzoyl(stearoyl)methane; 2-allyl-1-phenyl-1,3-butanedione; 2-methyl-2-acetylacetaldehyde; benzoylacetaldehyde; acetoacetyl-3-cyclohexene; bis(2,6-dioxo-cyclohexyl)methane; 2-acetyl-1-oxo-1,2,3,4-tetrahydronaphthalene; 2-palmitoyl-1-oxo-1,2,3,4-tetrahydronaphtha-lene; 1-oxo-2-stearoyl-1,2,3,4-tetrahydronaphthalene; 2-acetyl-1-cyclohexanone; 2-benzoyl-1-cyclohexanone; 2-acetyl-1,3-cyclohexanedione; dibenzoylmethane; tribenzoylmethane; bis(para-methoxybenzoyl)methane; 1-(N-phenyl-carbamoyl)-1-benzoylacetone, 1-(N-phenylcarbamoyl)-1-acetylacetone; and diacetylacetohexane.

12. Process according to one of Claims 1 to 11,

characterized in that, in addition, from 0.01% to 5% by weight of organic phosphite is used relative to the polymer to be stabilized.

13. Process according to one of Claims 11 and 12, characterized in that, in addition, from 0.005% to 1.5% by weight of polyol is used relative to the polymer to be stabilized.

14. Process according to Claim 13, characterized in that the polyol used is chosen from those which possess more than 4 hydroxyl groups in their molecule and polyvinyl alcohols which possess a viscosity at 20° C, in an aqueous solution containing 4% by weight, of between $4 \times 10^{-3}$ and $60 \times 10^{-3}$ pascal second.

15. Stabilizing composition for carrying out the process according to any one of Claims 1 to 14, characterized in that it contains:

a) at least one organic lanthanide derivative as defined in Claims 1 to 3 and 5 to 9,

b) at least one organic zinc or cadmium derivative as defined in Claims 1, 2 and 4, and

c) at least one of the secondary heat stabilizers as defined in Claims 1, 10 and 11.

16. Composition according to Claim 15, characterized in that the lanthanide derivate/zinc derivative or lanthanide derivative/cadmium derivative mixture is prepared directly in a single operation.

17. Composition according to Claims 15 and 16, characterized in that the ratio by weight of organic lanthanide derivative to organic zinc or cadmium derivative varies between 0.2 and 5.

18. Polymer based on vinyl chloride stabilized by the process according to one of Claims 1 to 14.

19. Shaped articles prepared using the stabilized polymers based on vinyl chloride obtained by the process according to one of Claims 1 to 14.